# EUROPEAN PATENT APPLICATION

(11) **EP 4 539 383 A1**
(43) Date of publication of application: **16.04.2025**
(21) Application number: 22945298.2
(22) Date of filing: 09.06.2022
(51) Int. Cl.: H04L 5/14

(54) **DUPLEX TERMINAL, DUPLEX COMMUNICATION METHOD AND APPARATUS, AND CHIP**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZHANG, Zhi, Dongguan, Guangdong 523860 (CN)
(74) Representative: Novagraaf Technologies
(86) International application number: PCT/CN2022/097954
(87) International publication number: WO 2023/236154

(57) **Abstract**

The present application relates to the field of communications and discloses a duplex terminal, a duplex communication method and apparatus, and a chip. The terminal (900) comprises: a receiver (910); and a backscatter transmitter (920), the backscatter transmitter (920) being a transmitter that sends information by means of backscatter. **In** a communication system, in the process of the receiver (910) receiving a first signal, the backscatter transmitter (920) transmits a second signal while performing backscatter on the first signal, and supports the second signal to occupy the same frequency as the first signal, thereby implementing the capability of simultaneously transmitting and receiving signals at the same frequency, and implementing full-duplex communication with low complexity and high flexibility on the terminal side. Moreover, because the backscatter transmitter (920) has zero or low power consumption, full-duplex communication in a lower power consumption state is also implemented.

## Description

### TECHNICAL FIELD

The present disclosure relates to the technical field of communications, and in particular, relates to a duplex terminal, a method and apparatus for duplex communication, and a chip thereof.

### BACKGROUND

Full duplex communication allows data to be transmitted in two directions simultaneously during the communication. For example, a terminal simultaneously receives downlink data and transmits uplink data.

In a mobile communication system according to the related arts, a duplex terminal is capable of operating in a frequency division duplexing (FDD) mode or a time division duplexing (TDD) mode. In the FDD mode, the terminal is capable of performing transmit and receive operations simultaneously. Different carriers are used for transmitting information and receiving information to prevent interference between transmission and reception, and a spacing needs to be defined between carriers. In the TDD mode, the terminal is capable of performing transmission and reception on the same carrier. Information needs to be transmitted and received at different time to prevent interference between transmission and reception.

However, the duplex terminal is incapable of performing the transmit and receive operations at the same frequency and in the same time domain in the FDD or TDD mode, thereby failing to meet communication requirements in some scenarios.

### SUMMARY

Embodiments of the present disclosure provide a duplex terminal, a method and apparatus for duplex communication, and a chip thereof. The embodiments of the present disclosure provide a duplex terminal based on the backscatter technology, which can support full-duplex communication with zero power consumption or low power consumption at the same frequency and in the same time domain. The technical solutions are as follows.

According to one aspect of the present disclosure, a duplex terminal is provided. The duplex terminal includes: a receiver; and a backscatter transmitter, wherein the backscatter transmitter is a transmitter capable of transmitting information by backscattering.

According to one aspect of the present disclosure, a method for duplex communication is provided. The method is applicable to the duplex terminal as described above. The method includes: receiving a first signal using the receiver; and transmitting a second signal by backscattering the first signal using the backscatter transmitter.

According to one aspect of the present disclosure, a method for duplex communication is provided. The method is applicable to a network device. The method includes: transmitting a first signal to a duplex terminal; and receiving a second signal from the duplex terminal, wherein the second signal is transmitted by backscattering the first signal.

According to one aspect of the present disclosure, an apparatus for duplex communication is provided. The apparatus includes: a receiver module, configured to receive a first signal; and a backscatter transmitter module, configured to transmit a second signal by backscattering the first signal.

According to one aspect of the present disclosure, an apparatus for duplex communication is provided. The apparatus includes: a transmitter module, configured to transmit a first signal to a duplex terminal; and a receiver module, configured to receive a second signal from the duplex terminal, wherein the second signal is transmitted by backscattering the first signal.

According to one aspect of the present disclosure, a terminal is provided. The terminal includes: a processor; a receiver and a backscatter transmitter that are connected to the processor; and a memory configured to store one or more executable instructions of the processor. The processor, when loading and executing the one or more executable instructions, is caused to perform the method for duplex communication as described in the above aspect.

According to one aspect of the present disclosure, a network device is provided. The network device includes: a processor; a transmitter and a backscatter receiver that are connected to the processor; and a memory configured to store one or more executable instructions of the processor. The processor, when loading and executing the one or more executable instructions, is caused to perform the method for duplex communication as described in the above aspect.

According to one aspect of the present disclosure, a chip is provided. The chip includes at least one of: at least one programmable logic circuit or one or more program instructions. A terminal equipped with the chip is run to perform the method for duplex communication as described above.

The technical solutions according to the embodiments of the present disclosure achieve at least the following beneficial effects.

A receiver and a backscatter transmitter are provided in a duplex terminal. When the receiver receives a first signal, the backscatter transmitter transmits a second signal by backscattering the first signal. Moreover, in the case that the second signal is supported to occupy the same or partially the same frequency as the first signal, utilization efficiency of spectrum resources is improved while full-duplex communication of simultaneous signal transmission and reception at the same frequency is supported, thereby saving spectrum resources used by a single terminal and helping to accommodate more terminals in a unit spectrum resource. Moreover, in the case that the backscatter transmitter has zero power consumption or low power consumption, full-duplex communication in a lower power state is achieved, thereby effectively reducing energy consumption of the terminal and prolonging a battery life of the terminal.

### BRIEF DESCRIPTION OF DRAWINGS

For clearer descriptions of the technical solutions in the embodiments of the present disclosure, the accompanying drawings required for describing the embodiments are briefly introduced hereinafter. Apparently, the accompanying drawings in the following description show merely some embodiments of the present disclosure, and those of ordinary skill in the art may still derive other accompanying drawings from these accompanying drawings without creative efforts.
FIG. 1 is a schematic diagram of a zero-power communication system in the related art;
FIG. 2 is a schematic diagram of radio frequency (RF) energy harvesting in the related art;
FIG. 3 is a schematic diagram of a backscatter communication process in the related art;
FIG. 4 is a schematic diagram of resistance load modulation in the related art;
FIG. 5 is a schematic diagram of a coding mode in the related art;
FIG. 6 is a schematic diagram of an environmental backscatter system in the related art;
FIG. 7 is a schematic diagram of a symbiotic communication system in the related art;
FIG. 8 is a schematic diagram of a signal relationship between primary and secondary systems in the symbiotic communication system in the related art;
FIG. 9 is a schematic diagram of a duplex terminal according to some embodiments of the present disclosure;
FIG. 10 is a schematic diagram of a duplex terminal according to some embodiments of the present disclosure;
FIG. 11 is a schematic diagram of a duplex terminal according to some embodiments of the present disclosure;
FIG. 12 is a schematic diagram of a duplex terminal according to some embodiments of the present disclosure;
FIG. 13 is a schematic diagram of a duplex terminal according to some embodiments of the present disclosure;
FIG. 14 is a schematic diagram of a duplex terminal according to some embodiments of the present disclosure;
FIG. 15 is a flowchart of a method for duplex communication according to some embodiments of the present disclosure;
FIG. 16 is a schematic diagram of a method for duplex communication according to some embodiments of the present disclosure;
FIG. 17 is a schematic diagram of a method for duplex communication according to some embodiments of the present disclosure;
FIG. 18 is a schematic diagram of a method for duplex communication according to some embodiments of the present disclosure;
FIG. 19 is a schematic diagram of a method for duplex communication according to some embodiments of the present disclosure;
FIG. 20 is a schematic diagram of a method for duplex communication according to some embodiments of the present disclosure;
FIG. 21 is a flowchart of a method for duplex communication according to some embodiments of the present disclosure;
FIG. 22 is a structural block diagram of an apparatus for duplex communication according to some embodiments of the present disclosure;
FIG. 23 is a structural block diagram of an apparatus for duplex communication according to some exemplary embodiments of the present disclosure;
FIG. 24 is a schematic structural diagram of a device for duplex communication according to some embodiments of the present disclosure; and
FIG. 25 is a schematic structural diagram of a device for duplex communication according to some embodiments of the present disclosure.

### DETAILED DESCRIPTION

For clearer descriptions of the objects, technical solutions, and advantages of the present disclosure, the embodiments of the present disclosure are further described in detail hereinafter with reference to the accompanying drawings. Embodiments are described in detail herein, examples of which are illustrated in the accompanying drawings. In the case that the following description is made with reference to the accompanying drawings, unless indicated otherwise, same numbers in different accompanying drawings represent same or similar elements. Implementations described in the following embodiments do not represent all implementations consistent with the present disclosure. Instead, they are merely examples of apparatuses and methods consistent with some aspects of the present disclosure as recited in the appended claims.

The terms used in the present disclosure are intended only to describe particular embodiments and are not intended to limit the present disclosure. As used in the present disclosure and the appended claims, the singular forms of "a," "an," and "the" are also intended to include plural referents, unless otherwise clearly specified in the context. It should be further understood that the term "and/or" used herein refers to any and all possible combinations of one or more of relevant listed items.

It should be understood that although the terms such as first, second, and third may be used in the present disclosure to describe various information, the information should not be limited to these terms. These terms are only used to distinguish the same type of information from each other. For example, without departing from the scope of the present disclosure, first information may be referred to as second information, and similarly, the second information may be referred to as the first information. Depending on the context, the word "if" as used may be interpreted as "in the case that... " or "when... " or "in response to determining."

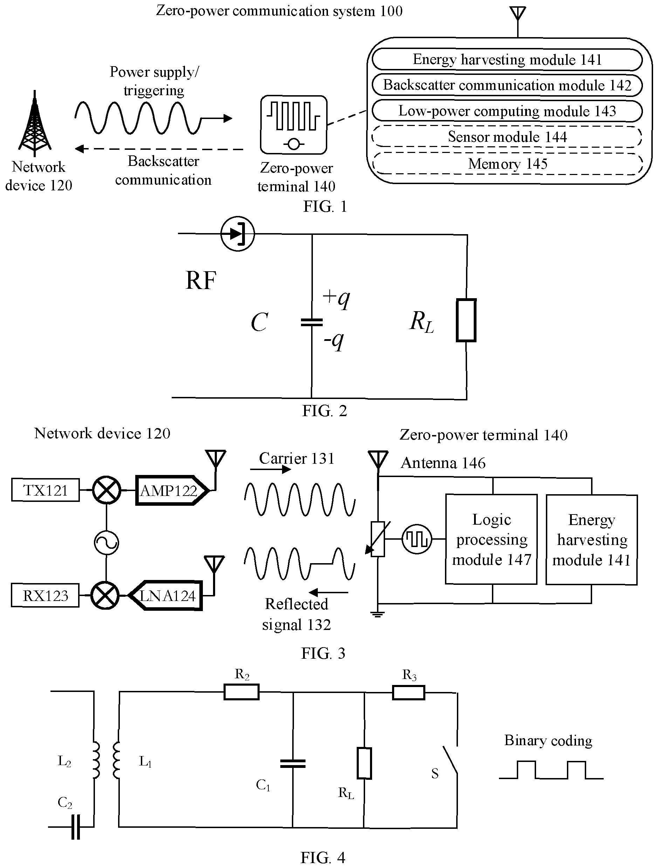

FIG. 1 is a schematic diagram of a zero-power communication system 100. The zero-power communication system 100 includes a network device 120 and a zero-power terminal 140.

The network device 120 is configured to transmit a wireless energy supply signal and a downlink communication signal to the zero-power terminal 140 and receive a backscattering signal from the zero-power terminal 140. The zero-power terminal 140 includes an energy harvesting module 141, a backscattering communication module 142, and a low-power computing module 143. The energy harvesting module 141 may harvest energy carried by radio waves in space for driving the low-power computing module 143 of the zero-power terminal 140 and implement backscattering communication. Upon acquiring the energy, the zero-power terminal 140 may receive control signaling from the network device 120 and transmit data to the network device 120 by backscattering according to the control signaling. The sent data may be from data stored in the zero-power terminal (e.g., identity or pre-written information, such as production date, brand, and manufacturer).

The zero-power terminal 140 may further include a sensor module 144 and a memory 145. The sensor module 144 may include various sensors. The zero-power terminal 140 may report, based on a zero-power mechanism, data collected by the various sensors. The memory 145 is configured to store some basic information, such as item identifiers, or acquire sensing data, such as ambient temperature and ambient humidity.

The zero-power terminal does not need any battery, and simple signal demodulation, decoding or coding, modulation, and other simple operations may be implemented using the low-power computing module 143. Therefore, a zero-power module only requires a simple hardware design, thereby lowering the cost and reducing the size of a zero-power device.

In the following, key technologies of zero-power communication are introduced.

### •RF Power Harvesting

FIG. 2 is a schematic diagram of RF power harvesting. The RF power harvesting is to harvest, based on the principle of electromagnetic induction, spatial electromagnetic wave energy using an RF module by electromagnetic induction and connection to a capacitor C and a load resistor R_{L} that are connected in parallel to acquire energy required to drive the zero-power terminal to operate, for example, driving a low-power demodulation module, a modulation module, a sensor, and memory reading. Therefore, the zero-power terminal does not need any traditional battery.

### •Backscattering Communication

FIG. 3 is a schematic diagram of a backscattering communication process. The zero-power terminal 140 receives a wireless signal carrier 131 from a transmit (TX) module 121 of the network device 120 by using an asynchronous mapping procedure (AMP) 122, modulates the wireless signal carrier 131, loads to-be-transmitted information using a logic processing module 147, and harvests RF energy using the energy harvesting module 141. The zero-power terminal 140 radiates a modulated reflected signal 132 using an antenna 146. This information transmission process is called backscattering communication. A receive (RX) module 123 of the network device 120 receives the modulated reflected signal 132 using a low-noise amplifier (LNA) 124. Backscattering and load modulation functions are inseparable. Load modulation is a process of completing modulation by adjusting and controlling circuit parameters of an oscillation circuit of the zero-power terminal 140 according to rhythms of data streams to cause parameters such as impedance of electronic tags to change accordingly.

The load modulation technology mainly includes resistive load modulation and capacitive load modulation. FIG. 4 is a schematic diagram of resistive load modulation. In the resistive load modulation, the load resistor RL is connected in parallel to a third resistor R3, a switch S is turned on or turned off based on binary-coded control, turn-on or turn-off of the third resistor R3 may cause a change of voltage on a circuit, the load resistor RL is connected in parallel to a first capacitor C1, the load resistor RL is connected in series to a second resistor R2, and the second resistor R2 is connected in series to a first inductor L1. The first inductor L1 is coupled to a second inductor L2, and the second inductor L2 is connected in series to a second capacitor C2. In this way, amplitude shift keying (ASK) may be implemented. That is, signal modulation and signal transmission are implemented by adjusting an amplitude of the backscattering signal from the zero-power terminal. Similarly, in the capacitive load modulation, a resonant frequency of a circuit may be changed based on turn-on or turn-off of a capacitor, such that frequency shift keying (FSK) is implemented. That is, signal modulation and signal transmission are implemented by adjusting an operating frequency of the backscattering signal from the zero-power terminal.

The zero-power terminal carries out information modulation on an incoming signal by load modulation, such that the backscattering communication process is implemented. The zero-power terminal has the following significant advantages: the terminal does not actively transmit any signal, and no complex RF link, such as a power amplifier (PA) and an RF filter in the RF link, is required; the terminal is not required to actively generate any high-frequency signal, and thus a high-frequency crystal oscillator is not required; and the terminal carries out signal transmission by backscattering communication, without consuming energy of the terminal.

Next, a coding mode of zero-power communication is introduced.

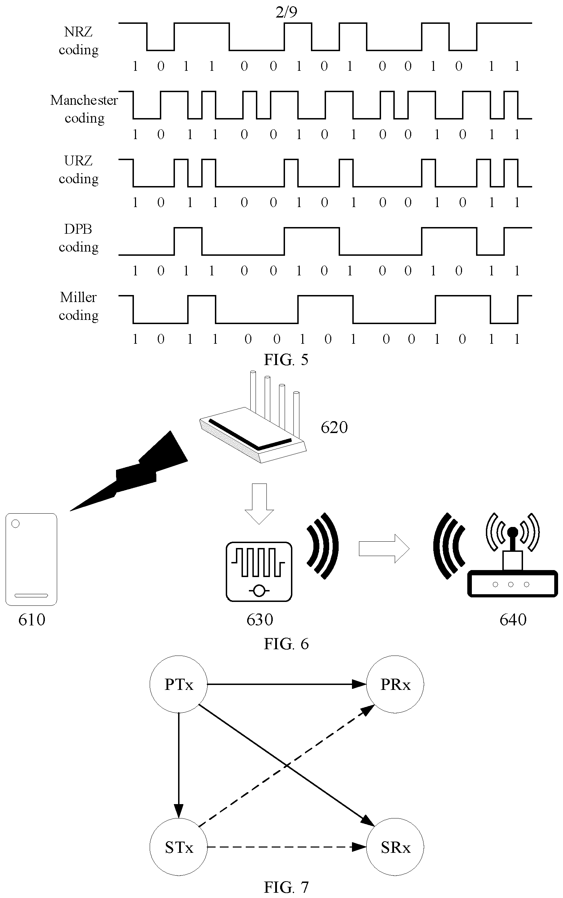

FIG. 5 is a schematic diagram of a coding mode. For data transmitted by electronic tags, binary "1" and binary "0" may be represented using different forms of codes. A radio frequency identification (RFID) system generally adopts one of: non-return-to-zero (NRZ) coding, Manchester coding, unipolar return-to-zero (URZ) coding, differential binary phase (DBP) coding, Miller coding, or differential coding. That is, 0 and 1 may be represented using different pulse signals.
- In NRZ coding, binary "1" is represented by a high level, and binary "0" is represented by a low level. FIG. 5 is a schematic diagram of levels of binary data 101100101001011 encoded by NRZ coding.
- Manchester coding is also referred to as split-phase coding. In Manchester coding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits transmitted by a plurality of electronic tags at the same time have different values, received rising and falling edges offset each other, resulting in an uninterrupted carrier signal throughout the entire bit length. In Manchester coding, it is impossible that a state without a change is present within the bit length. A reader-writer may determine, using the error, a specific location where a collision occurs. Manchester coding helps detect data transmission errors, and is generally used for data transmission from the electronic tags to the reader-writer when load modulation or backscattering modulation of carriers is adopted. FIG. 5 is a schematic diagram of levels of binary data 101100101001011 encoded by Manchester coding.
- In URZ coding, binary "1" is represented by a high level in a first half bit cycle of URZ coding, and binary "1" is represented by a low-level signal that lasts for an entire bit cycle. FIG. 5 is a schematic diagram of levels of binary data 101100101001011 encoded by URZ coding.
- In DBP coding, binary "0" is represented by any edge in a half bit cycle, and binary "1" is represented by no edge. In addition, levels are inverted at the beginning of each bit cycle. It is relatively easy for the receiver to reconstruct a bit beat. FIG. 5 is a schematic diagram of levels of binary data 101100101001011 encoded by DBP coding.
- In Miller coding, binary "1" is represented by any edge in a half bit cycle, and binary "0" is represented by a constant level in a next bit cycle. Level alternation occurs at the beginning of a bit cycle. It is relatively easy for the receiver to reconstruct a bit beat. FIG. 5 is a schematic diagram of levels of binary data 101100101001011 encoded by Miller coding.
- In differential coding, each binary "1" to be transmitted may cause a change in signal level, while for binary "0", the signal level remains the same.

Next, zero-power terminals are introduced in detail.

Based on energy sources and usage modes of the zero-power terminals, the zero-power terminals may be classified into the following types.

### •Passive zero-power terminal

Such a zero-power terminal does not need a built-in battery. When the zero-power terminal approaches a network device, the zero-power terminal is within a near field range formed by antenna radiation of the network device. Exemplarily, the network device is a reader-writer of the RFID system. Therefore, an antenna of the zero-power terminal generates an induced current by electromagnetic induction, and the induced current drives a low-power chip circuit of the zero-power terminal. Demodulation of a forward link signal and modulation of a reverse link signal are implemented. For a backscatter link, the zero-power terminal carries out signal transmission by backscattering. The passive zero-power terminal does not need a built-in battery to drive either for the forward link or a reverse link, and is a true zero-power terminal. The passive zero-power terminal does not need any battery, in which an RF circuit and a baseband circuit are very simple. For example, the passive zero-power terminal does not need devices such as an LNA, a PA, a crystal oscillator, and an analog-to-digital converter (ADC), and has many advantages such as small size, light weight, very low price, and long service life.

### •Semi-passive zero-power terminal

The semi-passive zero-power terminal is not provided with any conventional battery, which may harvest radio wave energy by an RF energy harvesting module, and store the harvested energy in an energy storage unit. Exemplarily, the energy storage unit is a capacitor. Upon acquiring the energy, the energy storage unit may drive a low-power chip-consumption circuit of the zero-power terminal. Demodulation of a forward link signal and modulation of a reverse link signal are implemented. For a backscatter link, the zero-power terminal carries out signal transmission by backscattering.

The semi-passive zero-power terminal does not need any built-in battery to drive either for the forward link or a reverse link, and in operation, uses energy stored in the capacitor that is from radio energy harvested by the RF energy harvesting module, which is a true zero-power terminal. The semi-passive zero-power terminal inherits many advantages of the passive zero-power terminal, such as small size, light weight, very low price, and long service life.

### •Active zero-power terminal

Zero-power terminals used in some scenarios are active zero-power terminals, which may be equipped with a built-in battery. The battery is configured to drive a low-power chip circuit of the zero-power terminal. Demodulation of a forward link signal and modulation of a reverse link signal are implemented. However, for a backscatter link, the zero-power terminal carries out signal transmission by backscattering. Therefore, zero power of the active zero-power terminal is mainly reflected in the fact that signal transmission in the reverse link does not require power of the terminal but uses backscattering. In the active zero-power terminal, the built-in battery supplies power to an RFID chip, and thus a read/write distance of an electronic tag is increased and reliability of communication is improved. The active zero-power terminal is applicable to some scenarios where relatively high requirements are put forward for a communication distance and a read latency.

With the development of the communication industry, especially the increase in applications in the 5G industry, there are more and more types and application scenarios of connected devices or objects, and stricter requirements are imposed on prices and power consumption of communication terminals. The application of battery-free and low-cost passive Internet of things (IoT) devices has become a key technology for cellular IoT, such that types and numbers of network link terminals are increased, and thus Internet of everything is truly implemented. The passive IoT devices may be based on the zero-power communication technology, such as the RFID technology, and extended on this basis to be applicable to the cellular IoT.

### Hereinafter, fusion of zero-power communication and symbiotic communication is described in detail.

In a typical environmental backscatter communication system, a zero-power terminal is capable of achieving backscatter communication using radio waves in space. As illustrated in FIG. 6, one router 620 and one smart device 610 that form a primary communication system communicate with each other, and a zero-power terminal 630 performs backscatter modulation on a downlink signal from the router 620, such that information that the zero-power terminal needs to transmit is transmitted to a reader-writer 640, and a secondary communication system supported by a backscatter communication technology is formed between the zero-power terminal 630 and the reader-writer 640. Due to potential application value, backscatter communication was named one of the top ten technological breakthroughs in 2016 by the Massachusetts Institute of Technology (MIT) Technology Review.

However, in the above environmental backscatter communication system, because backscatter uses the same spectrum as the primary system, communication of the secondary system may interfere with a communication link of the primary system. That is, a backscattered signal of the zero-power terminal 630 may be aliased with a signal of the primary system, thereby interfering with a receiver of the primary system. In this case, although the secondary system benefits from backscattering, it may be detrimental to the data transmission of the primary system.

To solve the above problems, the concept of the symbiotic communication is introduced. The symbiotic communication eliminates interference of a backscattered signal generated by the secondary system with the primary system and converts the backscattered signal into a signal beneficial to the primary system based on environmental backscatter over good coordination between primary and secondary communication systems.

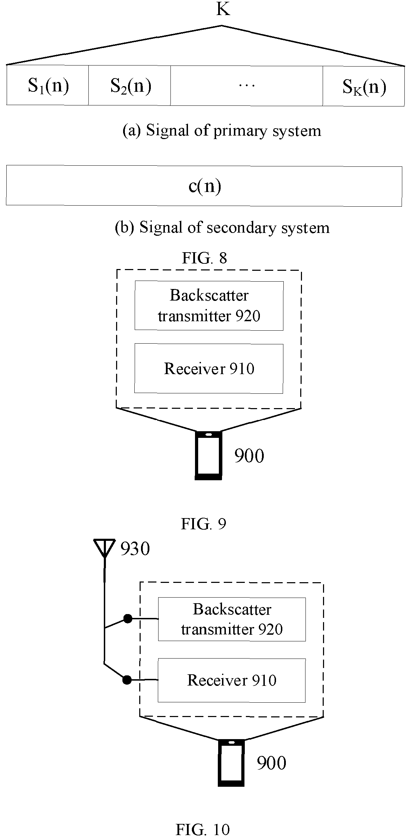

In a symbiotic communication system model as illustrated in FIG. 7, a primary transmitter (PTx) and a primary receiver (PRx) form the primary communication system. A secondary transmitter (STx) and a secondary receiver (SRx) form the secondary communication system. The STx performs backscatter modulation based on a signal from the PTx. Most importantly, a chip width Cp of a signal backscattered by the secondary system and a chip width Cs of a signal of the primary system need to satisfy a K-times relationship, i.e., Cp=K*Cs, as illustrated in FIG. 8. Therefore, the backscattered signal does not change within a time-domain interval corresponding to K chips of the primary system. Accordingly, in the case that the primary system performs coherent demodulation in units of K chips, the backscattered signal of the secondary system is equivalent to a multipath signal outside a primary received signal and mixed into the primary system. Therefore, based on such constraints, the secondary system, when performing its own communication by performing backscattering based on the signal of the primary system, does not interfere with the primary system but improves performance of the primary system by providing the multipath signal. Because this subtle relationship between the primary and secondary communication systems is similar to a symbiotic relationship in biology, the above communication system model is named the symbiotic communication.

The symbiotic communication solves the problem of wireless power supply of zero-power communication, and the problem of a spectrum of the zero-power communication, such that the zero-power communication can share a spectrum of traditional communication and coexist well with the traditional communication on the same spectrum. Therefore, the symbiotic communication is expected to become an important implementation manner for the zero-power communication.

It should be understood that, in some embodiments of the present disclosure, "5^{th} generation mobile communication technology (5G)" may also be referred to as "5G new radio (NR)" or "NR".

It is understandable that the term "indicate" in the embodiments of the present disclosure means a direct indication, an indirect indication, or an associated relationship. For example, A indicating B, which mean that A indicates B directly, e.g., B is acquired by A; or that A indicates B indirectly, e.g., A indicates C, wherein B is acquired by C; or that an association relationship is present between A and B.

It is understandable that the term "corresponding" may indicate a direct corresponding relationship or indirect corresponding relationship between two objects, or indicate an association relationship between two objects, or indicate relationships such as indicating and being indicated, configuring and being configured, or the like.

It is understandable that the "predefined" is implemented by pre-storing a corresponding code, a table, or another manner that may indicate related information in the device (for example, the terminal device or the network device), and the specific implementations are not limited in the present disclosure. For example, the term "predefined" refers to defined in a protocol.

It is understandable that the term "protocol" indicates a standard protocol in the field of communications. For example, the protocols include a long-term evolution (LTE) protocol, a NR protocol, and related protocols applied to the future communication system, which are not limited in the present disclosure.

The technical solutions described in some embodiments of the present disclosure are applicable to various communication systems, for example, a global system of mobile communication (GSM) system, a code-division multiple access (CDMA) system, a wideband code-division multiple access (WCDMA) system, a general packet radio service (GPRS), an LTE system, an advanced long-term evolution (LTE-A) system, a NR system, an evolution system of the NR system, an LTE-based access to unlicensed spectrum (LTE-U) system, a NR-based access to unlicensed spectrum (NR-U) system, a non-terrestrial network (NTN) system, a universal mobile telecommunication system (UMTS), a wireless local area network (WLAN), a wireless fidelity (Wi-Fi) system, a 5G system, a cellular Internet of things (IoT) system, and a cellular passive IoT system, are also applicable to subsequent evolution systems of a 5G NR system, and are further applicable to 6^{th} generation mobile communication technology (6G) and future evolved systems.

FIG. 9 is a schematic structural diagram of a duplex terminal 900 according to some embodiments of the present disclosure. The duplex terminal 900 includes a receiver 910 and a backscatter transmitter 920.

The duplex terminal 900 includes, but is not limited to, a handheld device, a wearable device, a vehicle-mounted device, an IoT device, and the like. The duplex terminal 900 may be at least one of a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a gamepad, an electronic tag, a controller, or the like.

The receiver 910 is configured to receive a first signal from a network device or another node. The another node may be a router, a power supply device, a peer device, or the like.

The backscatter transmitter 920 is configured to transmit a second signal by backscattering the first signal. In some embodiments, the backscatter transmitter 920 transmits the second signal by backscattering one part of the first signal. That is, during the process that the receiver 910 receives one part of the first signal, the backscatter transmitter 920 also transmits the second signal by backscattering another part of the first signal, thereby achieving full-duplex communication of simultaneous signal transmission and reception. The backscattered part of the first signal belongs to the first signal not received by the receiver 910.

For example, the first signal reaches an antenna of the duplex terminal 900, and a circuit state of the backscatter transmitter 920 is adjusted such that the backscatter transmitter 920 is in an impedance mismatch state. When the backscatter transmitter 920 transmits the second signal by backscattering one part of the first signal, the receiver 910 receives another part of the first signal. The part of the first signal backscattered by the backscatter transmitter 920 belongs to the first signal not received by the receiver 910.

In some embodiments, the receiver 910 and the backscatter transmitter 920 share the same antenna. As illustrated in FIG. 10, one antenna 930 is provided. The receiver 910 and the backscatter transmitter 920 share the antenna 930.

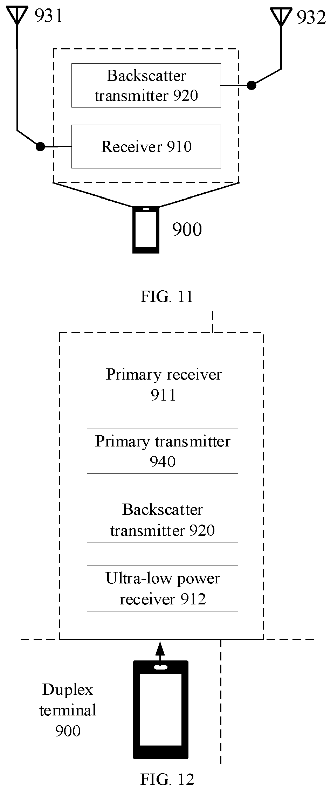

In some embodiments, as illustrated in FIG. 11, two antennas 930 are provided, including a first antenna 931 and a second antenna 932. The receiver 910 is connected to the first antenna 931, and the backscatter transmitter 920 is connected to the second antenna 932.

In some embodiments, at least two backscatter transmitters 920 are provided; or at least two backscatter transmit units are integrated in the backscatter transmitter 920.

In some embodiments, the antenna 930 is provided outside the receiver 910 and the backscatter transmitter 920; or the antenna 930 is integrated inside at least one of: the receiver 910 or the backscatter transmitter 920.

In some embodiments, the duplex terminal 900 reports capability information to a network device. The capability information indicates a capability of the duplex terminal 900 to support backscatter-based full-duplex communication, which facilitates the network device in selecting an appropriate transmission mode based on service requirements in different situations. For example, in a scenario where it is inappropriate to configure uplink (UL) transmission resources such as UL slots for the network device but the terminal is expected to transmit UL signals, the network device schedules the duplex terminal 900 with the full-duplex communication capability to transmit the UL signals by backscattering, and at the same time, schedules downlink (DL) data transmission for the duplex terminal 900, such that the duplex terminal 900 simultaneously receives DL signals and transmits UL signals.

In some embodiments, the node or network device transmitting the first signal is the same as or different from the node or network device receiving the second signal.

In some embodiments, the duplex terminal 900 performs full-duplex communication with the network device, and/or the duplex terminal 900 performs full-duplex communication with another node rather than the network device. In some embodiments, the another node includes a peer terminal.

In summary, the receiver and the backscatter transmitter are provided in the duplex terminal, and when the receiver receives the first signal, the backscatter transmitter transmits the second signal by backscattering the first signal, which achieves full-duplex communication of simultaneous signal transmission and reception with low complexity on the terminal side and supports transmit and receive operations at the same frequency and in the same time domain, thereby achieving the full-duplex communication in the true sense. The embodiments of the present disclosure are significantly different from the duplex terminal in the related art that can only receive signals or only transmit signals at the same moment. Moreover, because the second signal is supported to occupy the same or partially the same frequency as the first signal, utilization efficiency of spectrum resources are improved while full-duplex communication of simultaneous signal transmission and reception at the same frequency is supported, thereby saving spectrum resources used by a single terminal and helping to accommodate more terminals in a unit spectrum resource. Moreover, because the backscatter transmitter has zero power consumption or low power consumption, the full-duplex communication in a lower power state is also achieved, thereby effectively reducing energy consumption of the terminal and prolonging a battery life of the terminal.

In the case that the same antenna is used for signal reception and backscattering, costs can be saved. In the case that different antennas are used for signal reception and backscattering, signal interference is reduced. Moreover, by adjusting a transmission frequency and a backscattering mode of the backscattered signal, flexibility of the full-duplex communication is be improved, thereby ensuring signal reception performance and meeting requirements of the full-duplex communication in different scenarios.

The above duplex terminal 900 may alternatively be implemented in different manners. In some embodiments, the receiver 910 includes at least one of a primary receiver or a secondary receiver. Power consumption of the secondary receiver is less than power consumption of the primary receiver. In some other embodiments, the above duplex terminal 900 further includes a primary transmitter.

As illustrated in FIG. 12, the duplex terminal 900 includes: a primary receiver 911, an ultra-low power (secondary) receiver 912, a primary transmitter 940, and a backscatter transmitter 920.

The primary receiver 911 is configured to receive a first signal from a network device or another node. The primary receiver 911 may have a strong information processing capability, such as supporting broadband and high-rate information reception and processing. For example, the primary receiver 911 is an LTE terminal receiver, an NR terminal receiver, or a future 6G and subsequent terminal receiver. The ultra-low power receiver 912 is configured to receive the first signal from the network device or another node. The ultra-low power receiver 912 has a relatively low information processing capability, such as only supporting narrowband and low-rate information reception and processing. The ultra-low power receiver 912 may be used for reception of a small amount of information, thereby saving power consumption of the terminal. In some embodiments, the ultra-low power receiver 912 is a zero-power receiver.

Compared with the primary receiver 911, the ultra-low power receiver 912 is a receiver with extremely low power consumption or even zero power consumption. The ultra-low power receiver 912 uses a technology similar to RFID, such as passive, envelope detection, or energy harvesting. The ultra-low power receiver 912 may be activated and provided with energy by a wireless RF signal and configured to drive the ultra-low power receiver 912 to receive the first signal. The first signal is carried and transmitted over an LTE channel, an NR channel, or a future 6G and subsequent channel. The channels may be categorized based on different categorization standards. For example, in the case that the channels are categorized based on transmission directions of signals, the channels include an uplink channel, a downlink channel, and a sidelink channel. For another example, in the case that the channels are categorized based on purposes of signals, the channels include a data channel, a feedback channel, a control channel, a broadcast channel, and a random access channel. In some embodiments, the first signal is carried and transmitted over a physical downlink control channel (PDCCH), or the first signal is carried and transmitted over a physical downlink shared channel (PDSCH), or the first signal is a sidelink signal, or the first signal is a Wi-Fi signal, or the first signal is a Bluetooth signal. In some embodiments, the first signal is an orthogonal frequency division multiplexing (OFDM) signal.

The primary transmitter 940 is configured to transmit a third signal to the network device or another node. The primary transmitter 940 may have a strong information processing capability, such as supporting broadband and high-rate information coding, modulation, and transmission. For example, the primary transmitter 940 may be an LTE terminal transmitter, an NR terminal transmitter, or a further 6G and subsequent terminal receiver.

The backscatter transmitter 920 supports transmitting the second signal by backscattering. The backscatter transmitter 920 cannot autonomously generate the second signal and needs to generate the second signal carrying to-be-transmitted information by modulating and reflecting the received first signal.

The primary receiver 911 and the ultra-low power receiver 912 are collectively referred to as the receiver 910. In some embodiments, the receiver 910 includes at least one of: the primary receiver 911 or the ultra-low power receiver 912. Description is given in the embodiments based on an example in which the receiver 910 includes the two types of receivers. The ultra-low power receiver 912 is also referred to as a secondary receiver. Power consumption of the secondary receiver is less than power consumption of the primary receiver 911.

In some embodiments, the duplex terminal 900 further includes an antenna 930, the antenna 930 is connected to the receiver 910, and the antenna 930 is connected to the backscatter transmitter 920.

In some embodiments, one antenna 930 is provided. The primary receiver 911, the ultra-low power receiver 912, the primary transmitter 940, and the backscatter transmitter 920 share the antenna 930.

In some embodiments, two antennas 930 are provided, including a first antenna 931 and a second antenna 932. The backscatter transmitter 920 and the receiver 910 may or may not share the same antenna, and the use of the antenna of the primary transmitter 940 is not limited in the present disclosure. Illustratively, the primary receiver 911 and the ultra-low power receiver 912 are connected to the first antenna 931, and the primary transmitter 940 and the backscatter transmitter 920 are connected to the second antenna 932. Alternatively, the primary receiver 911 and the primary transmitter 940 are connected to the first antenna 931, and the ultra-low power receiver 912 and the backscatter transmitter 920 are connected to the second antenna 932. Alternatively, the primary receiver 911, the primary transmitter 940, and the ultra-low power receiver 912 are connected to the first antenna 931, and the backscatter transmitter 920 is connected to the second antenna 932. Alternatively, the primary receiver 911 is connected to the first antenna 931, and the backscatter transmitter 920, the primary transmitter 940, and the ultra-low power receiver 912 are connected to the second antenna 932. Alternatively, the primary receiver 911, the primary transmitter 940, and the backscatter transmitter 920 are connected to the first antenna 931, and the ultra-low power receiver 912 is connected to the second antenna 932.

In some embodiments, three antennas 930 are provided, including a first antenna 931, a second antenna 932, and a third antenna 943. The backscatter transmitter 920 and the receiver 910 may or may not share the same antenna, and the use of the antenna of the primary transmitter 940 is not limited in the present disclosure. Illustratively, the primary receiver 911 is connected to the first antenna 931, the primary transmitter 940 and the backscatter transmitter 920 are connected to the second antenna 932, and the ultra-low power receiver 912 is connected to the third antenna 943. Alternatively, the ultra-low power receiver 912 is connected to the first antenna 931, the primary transmitter 940 and the backscatter transmitter 920 are connected to the second antenna 932, and the primary receiver 911 is connected to the third antenna 943. Alternatively, the primary receiver 911 and the ultra-low power receiver 912 are connected to the first antenna 931, the backscatter transmitter 920 is connected to the second antenna 932, and the primary transmitter 940 is connected to the third antenna 943.

In some embodiments, four antennas 930 are provided, and the primary receiver 911, the ultra-low power receiver 912, the primary transmitter 940, and the backscatter transmitter 920 are connected to the four antennas respectively.

In some embodiments, at least two backscatter transmitters are provided in the duplex terminal 900, or at least two backscatter transmit units are integrated in the backscatter transmitter 920.

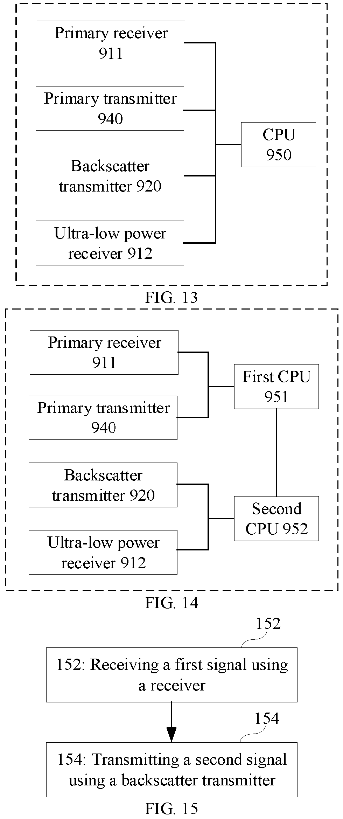

In some embodiments, as illustrated in FIG. 13, the duplex terminal 900 includes one central processing unit (CPU) 950 configured to perform computing and logical operations. The primary receiver 911, the ultra-low power receiver 912, the primary transmitter 940, and the backscatter transmitter 920 are all connected to the CPU 950.

In some embodiments, as illustrated in FIG. 14, the duplex terminal 900 includes two CPUs, including a first CPU 951 and a second CPU 952. Power consumption of the second CPU 952 is less than power consumption of the first CPU 951, and communication and interaction may be performed between the first CPU 951 and the second CPU 952. Illustratively, the primary receiver 911 and the primary transmitter 940 are connected to the first CPU 951, and the ultra-low power receiver 912 and the backscatter transmitter 920 are connected to the second CPU 952. Alternatively, the primary receiver 911 and the ultra-low power receiver 912 are connected to the first CPU 951, and the primary transmitter 940 and the backscatter transmitter 920 are connected to the second CPU 952. Alternatively, the primary receiver 911, the primary transmitter 940, and the backscatter transmitter 920 are connected to the first CPU 951, and the ultra-low power receiver 912 is connected to the second CPU 952.

In some embodiments, the duplex terminal 900 includes three CPUs, including a first CPU 951, a second CPU 952, and a third CPU 953. Illustratively, the primary receiver 911 is connected to the first CPU 951, the primary transmitter 940 and the backscatter transmitter 920 are connected to the second CPU 952, and the ultra-low power receiver 912 is connected to the third CPU 953. Alternatively, the ultra-low power receiver 912 is connected to the first CPU 951, the primary transmitter 940 and the backscatter transmitter 920 are connected to the second CPU 952, and the primary receiver 911 is connected to the third CPU 953. Alternatively, the primary receiver 911 and the ultra-low power receiver 912 are connected to the first CPU 951, the backscatter transmitter 920 is connected to the second CPU 952, and the primary transmitter 940 is connected to the third CPU 953.

In some embodiments, the duplex terminal 900 includes four CPUs, and the primary receiver 911, the ultra-low power receiver 912, the primary transmitter 940, and the backscatter transmitter 920 are connected to the four CPUs respectively.

In some embodiments, in the case that the duplex terminal 900 is busy in transmitting and receiving signals, the first CPU and the second CPU operate at the same time to improve efficiency of signal transmission and reception. In the case that the duplex terminal 900 is not busy in transmitting and receiving signals or only needs to receive a small amount of information, the first CPU 951 stops operating and the second CPU 952 operates, thereby reducing resource consumption during operation of the duplex terminal 900 and saving costs.

In summary, in the terminal according to the embodiments, when a signal is received by a receiver, the signal is transmitted by backscattering, thereby achieving the full-duplex communication of simultaneous signal transmission and reception and support transmit and receive operations at the same frequency and in the same time domain, which achieves full-duplex communication in the true sense and is significantly different from the duplex terminal in the related art that can only receive signals or only transmit signals at the same moment. Because the second signal is supported to occupy the same or partially the same frequency as the first signal, utilization efficiency of spectrum resources is improved while full-duplex communication of simultaneous signal transmission and reception at the same frequency is supported, thereby saving spectrum resources used by a single terminal and helping to accommodate more terminals in a unit spectrum resource. Moreover, because the backscatter transmitter has zero power consumption or low power consumption, the full-duplex communication in a lower power state is achieved, thereby effectively reducing energy consumption of the terminal and prolonging a battery life of the terminal.

In the case that the same antenna is used for signal reception and backscattering, costs are saved. In the case that different antennas are used for signal reception and backscattering, signal reception performance is improved. Moreover, by adjusting a transmission frequency and a backscattering mode of the backscattered signal, flexibility of the full-duplex communication is improved, thereby ensuring signal reception performance and meeting communication requirements in different scenarios.

FIG. 15 is a flowchart of a method for duplex communication according to some embodiments of the present disclosure. Description is given in the embodiments based on an example in which the method is applicable to the above duplex terminal 900. The method includes at least part of the following processes.

**In process 152,** a first signal is received using a receiver.

In the embodiments, the receiver is at least one of: a primary receiver or a secondary receiver, wherein the secondary receiver is also referred to as an ultra-low power receiver. The receiver receives the first signal from a network device or another node.

**In process 154,** a second signal is transmitted using a backscatter transmitter.

The backscatter transmitter supports information transmission by backscattering. The backscatter transmitter modulates and reflects the first signal not received by the receiver, that is, transmits the second signal. The backscatter transmitter transmits the second signal to the network device or another node.

The first signal is carried and transmitted over an LTE channel, an NR channel, or a future 6G and subsequent channel. The channels may be categorized based on different categorization standards. For example, in the case that the channels are categorized based on transmission directions of signals, the channels include an uplink channel, a downlink channel, and a sidelink channel. For another example, in the case that the channels are categorized based on purposes of signals, the channels include a data channel, a feedback channel, a control channel, a broadcast channel, and a random access channel.

In some embodiments, the first signal adopts a first transmission mode, and the second signal adopts a second transmission mode. At least one of a receiver, a waveform, a modulation mode, a coding mode, or a multiple access mode is different between the first transmission mode and the second transmission mode.

Each of the modulation modes of the first transmission mode and the second transmission mode includes any one of ASK modulation, FSK modulation, 2phase-shift keying (2PSK) modulation, orthogonal frequency-division multiplexing (OFDM) modulation, quadrature phase-shift keying (QPSK) modulation, or quadrature amplitude modulation (QAM).

The ASK modulation is digital modulation in which amplitude of a carrier varies with a digital baseband signal. In the case that the digital baseband signal is binary, the modulation mode is binary amplitude shift keying (2ASK) modulation. The 2ASK modulation is also referred to as on-off keying (OOK) modulation, which controls on and off of a sinusoidal carrier by using a unipolar non-return-to-zero code sequence. In some embodiments, ASK further includes 4ASK, 8ASK, or the like, which is not limited in the embodiments.

The FSK modulation is digital modulation in which a frequency of the carrier varies with the digital baseband signal. In the case that the digital baseband signal is binary, the modulation mode is binary frequency shift keying (2FSK) modulation. The 2FSK modulation completes information transmission by converting two different carrier signals into digital signals. A state of transmitted information is represented by a change of the carrier frequency. The frequency of the modulated carrier varies with a 0/1 state of a binary sequence. In some embodiments, FSK further includes 4FSK, 8FSK, or the like, which is not limited in the embodiment.

The PSK modulation is digital modulation in which a phase of the carrier varies with the digital baseband signal. 2PSK is a simplest form of PSK, and conveys binary information over two carriers with an initial phase interval of 180, also known as binary phase shift keying (BPSK). QPSK is quaternary PSK, and represents the input digital information using four different phase differences of the carrier.

The OFDM modulation is one type of multi carrier modulations (MCMs), and its main principle is to divide a channel into several orthogonal sub-channels, convert a high-speed data signal into parallel low-speed sub-data streams, and modulate the sub-data streams on each of the sub-channels for transmission. OFDM includes V-OFDM, W-OFDM, F-OFDM, MIMO-OFDM, multi-band-OFDM, or the like, which is not limited in the embodiments.

The QAM modulation is a double-sideband modulation in which two mutually orthogonal co-frequency carriers are suppressed by two independent baseband digital signals, and two-way parallel digital information transmissions is achieved by using the property that the modulated signals are orthogonal in frequency spectrums in the same bandwidth. The QAM modulation is a modulation technology that combines multiple amplitude shift keying (MASK) modulation and multiple phase-shift keying (MPSK) modulation together, such that the bandwidth is doubled.

It should be noted that the examples of the modulation mode of the first transmission mode and the modulation mode of the second transmission mode in the above embodiments are only examples, and should not constitute any limitation on the present disclosure, and other existing or future-defined modulation modes are not excluded from generating the first transmission mode or the second transmission mode.

Each of coding modes of the first transmission mode and the second transmission mode includes any one of NRZ coding, Manchester coding, URZ coding, DBP coding, Miller coding, differential coding, reed-muller (RM) code coding, tail biting convolutional code (CC) (TBCC) coding, turbo code coding, outer code coding, low density parity check code (LDPC) coding, or Polar code coding.

Each of multiple access modes of the first transmission mode and the second transmission mode includes any one of frequency-division multiple access (FDMA), time-division multiple access (TDMA), code-division multiple access (CDMA), orthogonal frequency-division multiple access (OFDMA), or discrete Fourier transform (DFT)-spread OFDM (DFTS-OFDM).

It should be understood that signal waveforms generated using different modulation modes are different. In the embodiments of the present disclosure, modulation modes of the first signal and the second signal are different, such that waveforms of the first signal and the second signal are different.

In some embodiments, the backscatter transmitter transmits the second signal by modulating and reflecting the first signal not received by the receiver; or the backscatter transmitter transmits the second signal by modulating and reflecting part of the first signal not received by the receiver.

In some embodiments, the backscatter transmitter transmits one second signal by modulating and reflecting the first signal not received by the receiver; or the backscatter transmitter transmits a plurality of subcarrier signals by modulating and reflecting the first signal not received by the receiver. The second signal is composed of the plurality of subcarrier signals.

In some embodiments, the process 152 and the process 154 are performed at the same time. That is, the duplex terminal 900 backscatters the second signal while receiving the first signal.

In summary, in the method according to the embodiments, when a signal is received by a receiver, the received signal is wholly or partially reflected by a backscatter transmitter, such that simultaneous information reception and transmission is achieved and transmit and receive operations at the same frequency and in the same time domain are supported, thereby achieving full-duplex communication in the true sense, improving flexibility of backscatter, and being significantly different from the method for duplex communication in the related art in which signals can only be received or can only be transmitted at the same moment. Because the second signal is supported to occupy the same or partially the same frequency as the first signal, utilization efficiency of spectrum resources is improved while full-duplex communication of simultaneous signal transmission and reception at the same frequency is supported, thereby saving spectrum resources used by a single terminal and helping to accommodate more terminals in a unit spectrum resource. Moreover, because the backscatter transmitter has zero power consumption or low power consumption, full-duplex communication in a lower power state is achieved, thereby effectively reducing energy consumption of the terminal and prolonging a battery life of the terminal.

Based on different numbers of antennas for transmitting and receiving signals simultaneously, the method for duplex communication in the present disclosure may be categorized into at least two categories.

In a first category, the same antenna is used for signal reception and backscattering.

In a second category, different antennas are used for signal reception and backscattering.

### Embodiments of the first category in which the same antenna is used for signal reception and backscattering

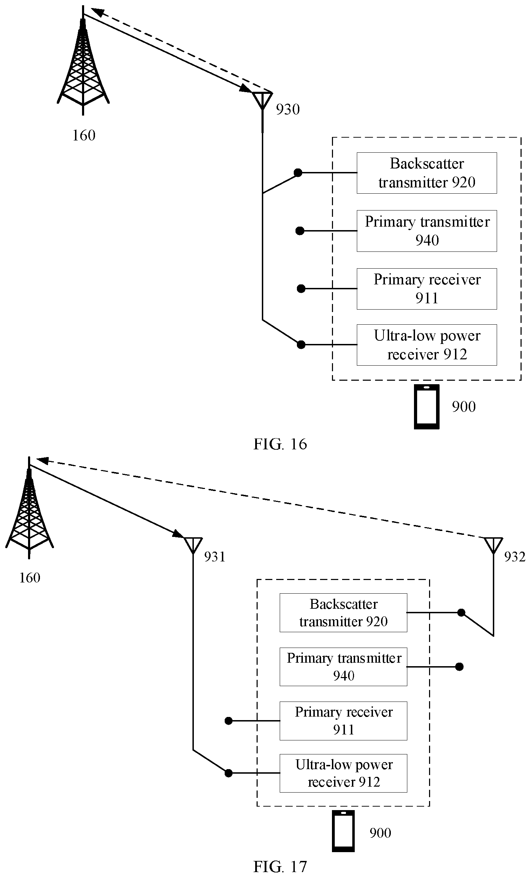

FIG. 16 is a schematic diagram of a method for duplex communication according to some embodiments of the present disclosure. Description is given in the embodiments based on an example in which the method is applicable to a network device 160 and a duplex terminal 900, wherein the duplex terminal 900 includes a primary receiver 911, an ultra-low power receiver 912, a primary transmitter 940, a backscatter transmitter 920, and an antenna 930.

In the embodiments, the duplex terminal 900 may include one or more antennas. In the case that the duplex terminal 900 includes only one antenna, the duplex terminal 900 uses a single antenna to transmit and receive signals. In the case that the duplex terminal 900 includes a plurality of antennas, the duplex terminal 900 uses the same antenna to receive the first signal and backscatter the second signal. Description is given in the embodiments based on an example in which the network device 160 transmits the first signal and receives the second signal. The primary receiver 911 and/or the ultra-low power receiver 912 in the duplex terminal 900 receive(s) the first signal from the network device 160, and the backscatter transmitter 920 transmits the second signal to the network device 160 by modulating the first signal not received by the primary receiver 911 and/or the ultra-low power receiver 912.

In some embodiments, in the case that the duplex terminal 900 performs signal reflection and the reflected second signal is a high-level signal, impedance in the backscatter transmitter 920 is set to a mismatch state, one part of the first signal is reflected by the backscatter transmitter 920, and another part of the signal is received and processed by the primary receiver 911 and/or the ultra-low power receiver 912. The backscattered part of the first signal belongs to the first signal not received by the primary receiver 911 and/or the ultra-low power receiver 912.

In some embodiments, in the case that the duplex terminal 900 does not perform signal reflection or the reflected second signal is a low-level signal or a zero-level signal, the impedance in the backscatter transmitter 920 is set to a match state, and all of the first signal is received and processed by the primary receiver 911 and/or the ultra-low power receiver 912.

In summary, in the method according to the embodiments, a full-duplex communication capability to simultaneously transmit and receive signals is achieved, and when a signal is received, backscattering is achieved at the same time by adjusting matching characteristics of its own circuit, and transmit and receive operations at the same frequency and in the same time domain are supported, thereby achieving the full-duplex communication in the true sense. Because the second signal is supported to occupy the same or partially the same frequency as the first signal, utilization efficiency of spectrum resources is improved while the full-duplex communication of simultaneous signal transmission and reception at the same frequency is supported, thereby saving spectrum resources used by a single terminal and helping to accommodate more terminals in a unit spectrum resource. Moreover, because the backscatter transmitter has zero power consumption or low power consumption, the full-duplex communication in a lower power state is achieved, thereby effectively reducing energy consumption of the terminal and prolonging a battery life of the terminal.

According to the method, flexibility of full-duplex communication is also improved, and in the case that the same antenna is used for full-duplex signal transmission and reception, communication costs are saved.

### Embodiments of the second category in which different antennas are used for signal reception and backscattering

FIG. 17 is a schematic diagram of a method for duplex communication according to some embodiments of the present disclosure. Description is given in the embodiments based on an example in which the method is applicable to a network device 160 and a duplex terminal 900, wherein the duplex terminal 900 includes a primary receiver 911, an ultra-low power receiver 912, a primary transmitter 940, a backscatter transmitter 920, an antenna 931, and an antenna 932.

In the embodiments, the duplex terminal 900 includes at least two antennas, and use two different antennas to respectively perform an operation of receiving a first signal and an operation of backscattering a second signal.

In some embodiments, the antenna 931 is an antenna configured for signal reception, and the antenna 932 is an antenna configured for backscattering.

Description is given in the embodiments based on an example in which the network device 160 transmits the first signal and receives the second signal. The primary receiver 911 and/or the ultra-low power receiver 912 in the duplex terminal 900 receive(s) the first signal from the network device 160 over the antenna 931, and the backscatter transmitter 920 modulates the first signal not received by the primary receiver 911 and/or the ultra-low power receiver 912 and transmits the second signal to the network device 160 over the antenna 932.

In some embodiments, in the case that the duplex terminal 900 performs signal reflection and the reflected second signal is a high-level signal, impedance in the backscatter transmitter 920 is set to a mismatch state, one part of the first signal is reflected by the backscatter transmitter 920, and another part of the signal is received and processed by the primary receiver 911 and/or the ultra-low power receiver 912. The backscattered part of the first signal belongs to the first signal not received by the primary receiver 911 and/or the ultra-low power receiver 912.

In some embodiments, in the case that the duplex terminal 900 does not perform signal reflection or the reflected second signal is a low-level signal or a zero-level signal, the impedance in the backscatter transmitter 920 is set to a match state, and all of the first signal is received and processed by the primary receiver 911 and/or the ultra-low power receiver 912.

In summary, in the method according to the embodiments, simultaneous signal transmission and reception are achieved, and when a signal is received, backscatter is achieved at the same time by adjusting matching characteristics of its own circuit, thereby improving flexibility of the full-duplex communication. Moreover, different antennas are used for signal reception and backscattering, and thus regardless of whether the signal is reflected on the antenna for backscattering, another antenna is capable of receiving the signal over the receiver, thereby achieving the full-duplex communication, preventing loss of received signal power in the case that the terminal performs backscattering, and ensuring signal reception performance.

Because the second signal is supported to occupy the same or partially the same frequency as the first signal, utilization efficiency of spectrum resources is improved while the full-duplex communication of simultaneous signal transmission and reception at the same frequency is supported, thereby saving spectrum resources used by a single terminal and helping to accommodate more terminals in a unit spectrum resource. Moreover, because the backscatter transmitter has zero power consumption or low power consumption, the full-duplex communication in a lower power state is also achieved, thereby effectively reducing energy consumption of the terminal and prolonging a battery life of the terminal.

### Frequency relationship between a backscattered signal and a received signal

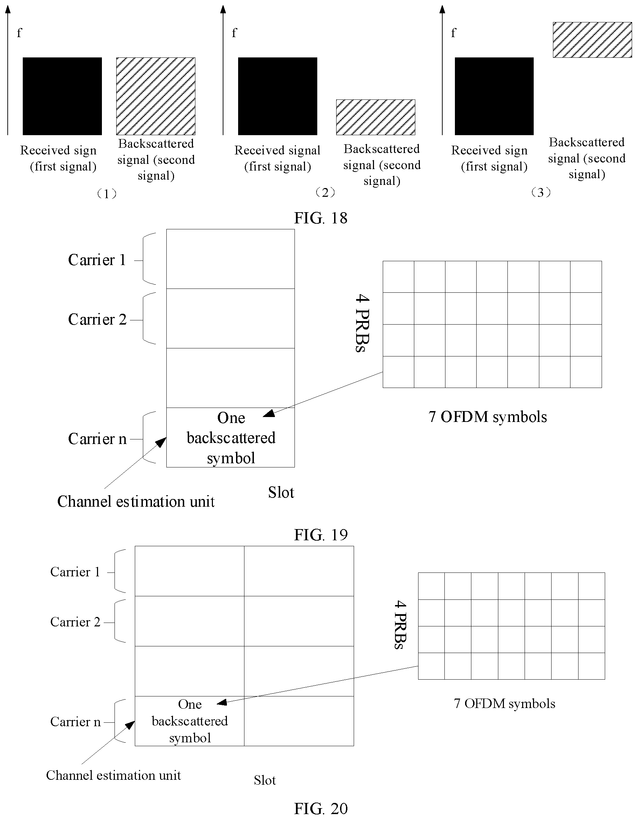

In the method for duplex communication as described above, in the case that the duplex terminal 900 performs the full-duplex communication by backscattering the second signal (the backscattered signal) based on the first signal (the received signal), a frequency relationship between the second signal and the first signal is as illustrated in FIG. 18, including at least one of the following cases.
(1) The first signal and the second signal occupy the same frequency.
   As illustrated in the case (1) in FIG. 18, a frequency domain used by the second signal backscattered by the duplex terminal 900 is exactly the same as a frequency domain used by the received first signal. That is, the duplex terminal 900 uses all of the frequency of the first signal for backscattering. For example, the first signal received by the receiver 910 in the duplex terminal 900 and the second signal transmitted by the backscatter transmitter 920 occupy the same frequency.
(2) The frequency of the second signal is part of the frequency of the first signal.
   As illustrated in the case (2) in FIG. 18, the duplex terminal 900 uses only the first signal at part of the frequency for backscattering. For example, the frequency occupied by the second signal transmitted by the backscatter transmitter 920 in the duplex terminal 900 is part of the frequency occupied by the first signal received by the receiver 910.
(3) The frequency of the second signal is different from the frequency of the first signal.

The first signal includes an active signal and a noise signal. The active signal is also referred to as a target signal, which refers to a signal from the network device or another node to the duplex terminal 900. The noise signal is also referred to as another signal. For example, the noise signal refers to a signal from the network device or another node to another terminal. The duplex terminal 900 receives the noise signal but does not demodulate the noise signal.

As illustrated in the case (3) in FIG. 18, the second signal backscattered by the duplex terminal 900 is located on the same carrier as the received first signal, thereby achieving the full-duplex communication, but the second signal and the first signal occupy different frequencies. For example, the receiver 910 in the duplex terminal 900 receives the first signal from the network device to the duplex terminal 900 and a fourth signal from the network device to a terminal B. The backscatter transmitter 920 demodulates one part of the first signal and backscatters and transmits the second signal, and the receiver 910 receives another part of the first signal. One part of the first signal backscattered by the backscatter transmitter 920 belongs to the first signal not received by the receiver 910. The second signal is transmitted at a frequency occupied by the fourth signal. That is, the second signal and the fourth signal occupy the same frequency point, but the second signal and the first signal occupy different frequencies.

In some embodiments, the duplex terminal 900 receives the first signal and also receives scheduling signaling. The scheduling signaling instructs the duplex terminal 900 to perform backscattering, and/or indicates a backscattering mode, and/or a backscattering range of the first signal, and/or a frequency resource used by the second signal transmitted by backscattering, and/or a time-domain resource used by the second signal transmitted by backscattering. In some embodiments, the scheduling signaling is from the network device or another node. The another node is a router, a power supply device, a peer device, or the like.

In some embodiments, the duplex terminal 900 receives the first signal and also receives scheduling signaling. The scheduling signaling instructs the duplex terminal 900 to backscatter part of the first signal, and instructs the frequency of the second signal transmitted by backscattering to occupy part of the frequency of the first signal.

In summary, the duplex terminal 900 in the present disclosure is provided with the receiver and the backscatter transmitter, and when the receiver receives the first signal, the backscatter transmitter transmits the second signal by backscattering the first signal. Moreover, the duplex terminal 900 supports that the second signal occupies the different frequency from the first signal to prevent interference between signal transmission and reception; further supports that the second signal occupies part of the frequency of the first signal, that is, the second signal occupies the same frequency as part of the first signal, which is conducive to transmit and receive operations when frequency resources are limited and saves spectrum resources in the communication system; and further supports that the second signal occupies the same frequency as the first signal, which implements transmit and receive operations at the same frequency and in the same time domain, achieves full-duplex communication in the true sense, improves flexibility of the communication system, and saves spectrum resources of the communication system.

In the present disclosure, a manner in which the duplex terminal 900 performs backscattering may be categorized into the following two categories.

### Mode 1: Single-carrier backscattering

A duplex device acquires a backscattered signal by performing backscattering on the first signal (OFDM signal) as a carrier signal.

### Mode 2: Multi-carrier backscattering

The duplex device acquires a backscattered signal by taking the first signal (OFDM signal) as a plurality of carrier signals, and performs backscattering on the plurality of carrier signals respectively.

### Mode 1: Single-carrier backscattering

The present disclosure provides embodiments of a method for duplex communication. Description is given in the embodiments based on an example in which the method is applicable to a duplex terminal 900.

The duplex terminal 900 is applicable to various communication scenarios. Description is given in the embodiments based on an example in which the duplex terminal 900 is in an IoT scenario. The duplex terminal 900 includes a receiver 910 and a backscatter transmitter 920. Generally, an IoT terminal device has lower complexity and only supports a narrower operating bandwidth, such that a bandwidth of backscatter transmission thereof is also narrower, such as 200 kHz or 1 MHz.

In some embodiments, the first signal received by the receiver 910 in the duplex terminal 900 is a narrowband signal, the backscatter transmitter 920 backscatters the narrowband signal, and the second signal transmitted is also a narrowband signal.

In some embodiments, the first signal received by the receiver 910 in the duplex terminal 900 is a broadband signal, the backscatter transmitter 920 backscatters the broadband signal, and the second signal sent is also a broadband signal.

In some embodiments, the network device or another node transmits the first signal to the duplex terminal 900, and the backscatter transmitter 920 backscatters the first signal. In some embodiments, the backscatter transmitter 920 backscatters one part of the first signal to transmit the second signal, and at the same time, the receiver 910 receives another part of the first signal. The backscattered part of the first signal belongs to the first signal not received by the receiver 910. The backscatter transmitter 920 transmits the second signal by backscattering one part of the first signal or part of the signal in part of the bandwidth. In the case that the backscatter transmitter 920 reflects only part of the signal on part of the bandwidth, a to-be-reflected signal is also referred to as a carrier signal.

In the embodiments, the duplex terminal 900 in the IoT scenario backscatters one part of the first signal or part of the signal in part of the bandwidth as a whole carrier signal. That is, the duplex terminal 900 adopts single-carrier backscattering such that the backscattered signal is carried over the entire second signal. In other words, a time-domain symbol of one backscattered signal may be carried on a narrowband or broadband backscattered signal, such that transmission performance of backscattering is improved.

### Mode 2: Multi-carrier backscattering

The present disclosure provides embodiments of a method for duplex communication. Description is given in the embodiments based on an example in which the method is applicable to a duplex terminal 900.

In the embodiments, the duplex terminal 900 is a high-capability terminal, and the duplex terminal 900 includes a receiver 910 and a backscatter transmitter 920.

In some embodiments, the first signal received by the receiver 910 in the duplex terminal 900 is a broadband signal. For example, the first signal is an OFDM signal.

In some embodiments, the network device or another node transmits the first signal to the duplex terminal 900, and the backscatter transmitter 920 backscatters the first signal. In some embodiments, the backscatter transmitter 920 transmits the second signal by backscattering one part of the first signal, and at the same time, the receiver 910 receives another part of the first signal. The backscattered part of the first signal belongs to the first signal not received by the receiver 910.

In some embodiments, a broadband OFDM signal (the first signal) not received by the receiver 910 is divided into N carriers, and the duplex terminal 900 performs backscattering respectively on the N carriers acquired by division. In some embodiments, bandwidths occupied by the N carriers do not overlap with each other. In some embodiments, the duplex terminal 900 modulates different information content in the case of backscattering different carriers. That is, the duplex terminal 900 transmits independent information bits on different carriers.

As illustrated in FIG. 19, the first signal from the network device received by the duplex terminal 900 is a broadband OFDM signal including 200 physical resource blocks (PRBs). A subcarrier spacing of the broadband OFDM signal is 15 kHz.

In some embodiments, the first signal is divided into 50 carriers. That is, every four PRBs are classified into one carrier. The backscatter transmitter 920 in the duplex terminal 900 is capable of modulating different bits in the case of performing backscattering on each of the carriers. Therefore, in the case that the duplex terminal 900 backscatters the first signal including 200 PRBs, up to 50 bits may be carried, thereby achieving backscattering by using a plurality of carriers. Each of the plurality of carriers is modulated to carry one of the bits therein.

A size of the bandwidth occupied by each of the plurality of carriers and the number of the plurality of carriers are not limited in the embodiments of the present disclosure. For example, the size of the bandwidth occupied by each of the plurality of carriers and the number of the plurality of carriers are determined based on the number of information bits to be transmitted by the duplex terminal 900. As an example, in the case that the OFDM signal is 100 MHz and the number of information bits to be transmitted by the duplex terminal 900 is 50, the duplex terminal 900 is capable of dividing the OFDM signal into 50 carriers, and each of the carriers occupies 2 MHz.

The present disclosure does not limit a specific implementation in which the duplex terminal 900 carries independent information bits on different carriers by performing a separate backscattering operation on each of the carriers.

In some embodiments, N independent backscatter units are integrated in the backscatter transmitter 920 of the duplex terminal 900. For example, the first signal is divided into 50 carriers. That is, every four PRBs are classified into one carrier. In the case that backscattering is performed on each of the carriers, the N independent backscatter units in the backscattering transmitter 920 in the duplex terminal 900 modulate different bits for the 50 carriers respectively, such that independent information bits are transmitted on different carriers to achieve backscattering by using the plurality of carriers. That is, backscattering part of different frequencies/time domains of the first signal may be performed by independent backscatter units.

In the embodiments, by multi-carrier backscattering, a plurality of information bits (e.g., as long as the bandwidth of the first signal is wide enough, enough carriers may be acquired by division, such that backscattering can transmit tens to hundreds of bits on the same time-domain symbol) can be transmitted at the same time (e.g., like the same backscattering symbol), thereby further increasing a communication rate of backscatter communication.

### Embodiments of symbiotic communication between the received signal and the reflected signal of duplex terminal

To facilitate distinction and description, in the embodiments of the present disclosure, a unit of the second signal serving as the backscattered signal in the time domain is denoted as a backscattering symbol, a unit in the frequency domain is denoted as a backscattering frequency-domain unit, and a minimum time-frequency unit of the backscattered signal is denoted as a backscattering time-frequency unit. A unit of the OFDM signal in the time domain is an OFDM symbol, and a unit in frequency domain is PRB.

The present disclosure provides embodiments of a method for duplex communication. Description is given in the embodiments based on an example in which the method is applicable to a duplex terminal 900.

In the embodiments, the duplex terminal 900 includes a receiver 910 and a backscatter transmitter 920, the receiver 910 receives the first signal, and the backscatter transmitter 920 reflects and transmits the second signal. For example, the first signal is a broadband OFDM signal.

In some embodiments, the second signal is composed of one subcarrier signal, and a time-domain width of the second signal is K times a time-domain width of the first signal, wherein K is a positive integer greater than 1. That is, a symbol width of the second signal is K times a symbol width of the first signal. In some embodiments, K symbols of the first signal form a unit for the duplex terminal 900 to perform channel estimation in the time domain. That is, the receiver 910 performs the channel estimation on the first signal based on the K symbols. In some embodiments, if one channel estimation unit occupies half of a slot, each half slot includes one pilot for the channel estimation when the first signal is received; and if one channel estimation unit occupies one slot, each slot includes one pilot for the channel estimation when the first signal is received.

In some embodiments, the second signal is composed of a plurality of subcarrier signals, and a time-domain width of the subcarrier signal of the second signal is K times the time-domain width of the first signal, wherein K is a positive integer greater than 1. That is, a symbol width of the subcarrier signal of the second signal is K times the symbol width of the first signal. In some embodiments, K symbols of the first signal form a unit for the duplex terminal 900 to perform the channel estimation in the time domain. That is, the receiver 910 performs the channel estimation on the first signal based on the K symbols. In some embodiments, if one channel estimation unit occupies half of a slot, each half slot includes one pilot for the channel estimation when the first signal is received; and if one channel estimation unit occupies one slot, each slot includes one pilot for the channel estimation when the first signal is received.

In some embodiments, one symbol of the second signal is aligned in time domain with K symbols of the first signal. That is, a start point of one symbol of the second signal is aligned with a start point of the K symbols of the first signal, and an end point of one symbol of the second signal is aligned with an end point of the K symbols of the first signal.

In some embodiments, one symbol of the subcarrier signals of the second signal is aligned in time domain with the K symbols of the first signal.

In some embodiments, a value of K is predefined, or preconfigured, or dynamically configured by the network device/another node for the duplex terminal 900, or autonomously determined by the duplex terminal 900. For example, the network device transmits first configuration information to the duplex terminal 900, wherein the first configuration information indicates the value of K.

In some embodiments, the second signal is composed of one subcarrier signal, and a frequency-domain bandwidth occupied by the second signal is not less than a minimum bandwidth unit used by the receiver 910 in performing the channel estimation on the first signal. For example, in the case that the receiver 910 receives the first signal, if the minimum unit for the channel estimation on the first signal is M PRBs, a minimum carrier bandwidth occupied by the second signal reflected by the backscatter transmitter 920 is also M PRBs. That is, the frequency-domain bandwidth occupied by the second signal is not less than M PRBs. M is a positive integer.

In some embodiments, the second signal is composed of a plurality of subcarrier signals, and a frequency-domain bandwidth occupied by the subcarrier signals of the second signal is not less than the minimum bandwidth unit used by the receiver 910 in performing the channel estimation on the first signal. For example, in the case that the receiver 910 receives the first signal, in the case that a minimum unit for the channel estimation on the first signal is M PRBs, a minimum carrier bandwidth occupied by the subcarrier signals of the second signal reflected by the backscatter transmitter 920 is also M PRBs. That is, the frequency-domain bandwidth occupied by the subcarrier signals of the second signal is not less than M PRBs.

In some embodiments, the second signal is aligned with the M PRBs in frequency domain.

In some embodiments, the subcarrier signals of the second signal are aligned with the M PRBs in frequency domain.

In some embodiments, a value of M is predefined, or preconfigured, or dynamically configured by the network device/another node for the duplex terminal 900, or autonomously determined by the duplex terminal 900. For example, the network device transmits second configuration information to the duplex terminal 900, wherein the second configuration information indicates the value of M.

In some embodiments, as illustrated in FIG. 20, the first signal received by the duplex terminal 900 is a broadband OFDM signal. On the first signal, K OFDM symbols and M PRBs form a minimum time-frequency unit, and the backscatter transmitter 920 transmits one backscattering symbol on the minimum time-frequency unit. On the minimum time-frequency unit, the backscatter transmitter 920 modulates part of the first signal by backscattering. The carrier signal, as described above, is a signal to be reflected when only the first signal on part of the bandwidth is reflected. In some embodiments, the OOK modulation is performed on the carrier signal, and a bit "0" or a bit "1" is transmitted. OOK is also known as 2ASK. A modulation principle of the OOK modulation is to modulate amplitude of the carrier signal to non-zero values and zero values corresponding to On and Off respectively, which indicate information bits respectively. An information bit 1 is modulated to On, and an information bit 0 is modulated to Off.

In the case that the bit "0" is transmitted when the first signal is reflected, for example, in a state where the first signal is not reflected, the signal received by the receiver 910 is only the first signal received by a target, that is, the broadband OFDM signal, without other interference.

In the case that the bit "1" is transmitted when the first signal is reflected, for example, in a state where the first signal is reflected, or in a state where the first signal is reflected at a high level, signals received by the receiver 910 include the first signal received by the target and the backscattered signal, that is, the broadband OFDM signal and the second signal. In this state, although the receiver 910 receives the second signal, the second signal is modulated as a whole with the minimum unit of the channel estimation performed by the receiver 910. That is, the second signal performs the same overall reflection on all OFDM on the minimum unit used by the receiver 910 in performing the channel estimation on the first signal. Therefore, the second signal may be considered to be a multipath signal of the first signal. Because there is a channel estimation pilot on the minimum unit of the channel estimation, a channel change caused by the second signal may be estimated by a channel estimator of the receiver 910. Apparently, the second signal does not interfere with the first signal, but forms a useful signal component, which facilitates the duplex terminal 900 in receiving the first signal.

The backscatter transmitter 920 is capable of carrying original information bits to form at least one data symbol by processing signals on part or all of the bandwidth of the first signal. The above processing may include, but is not limited to, coding, scrambling, modulation, and the like.

In some embodiments, the at least one data symbol is mapped to at least one backscattering time-frequency unit for transmission.

In some embodiments, one data symbol is mapped to one backscattering time-frequency unit for transmission.

In some embodiments, 1-bit information or multi-bit information are carried on one data symbol. For example, in the case that the backscattered signal (the second signal) is generated by the OOK modulation, the ASK modulation, or the FSK modulation, 1-bit information is carried on one data symbol. Alternatively, in the case that the backscattered signal is generated by high-order modulation, such as the QPSK modulation, 2-bit information is carried on one data symbol.

In some embodiments, in the case that information that the backscatter transmitter 920 needs to transmit is 1 bit (such as a scenario in which an acknowledgement (ACK)/negative acknowledgement (NACK) is transmitted), the backscatter transmitter 920 maps the 1-bit information to one backscattering time-frequency unit by single-carrier backscattering in the mode 1.

In some embodiments, where the backscatter transmitter 920 needs to transmit a plurality of information bits, such as dozens or even hundreds of bits, the backscatter transmitter 920 maps the multi-bit information to a plurality of backscattering time-frequency units by multi-carrier backscattering, such as multi-carrier backscattering in the mode 2. In these cases, resource mapping of information bits needs to be considered.

In some embodiments of the present disclosure, the backscatter transmitter 920 maps the at least one data symbol onto the at least one backscattering time-frequency unit in at least one of: time domain or frequency domain.

For example, the duplex terminal 900 sequentially maps the at least one data symbol onto at least one backscattering time-frequency unit in order of the time domain and the frequency domain.

Alternatively, the duplex terminal 900 sequentially maps the at least one data symbol onto the at least one backscattering time-frequency unit in order of the frequency domain and the time domain.

In some embodiments, in the case that the at least one data symbol is mapped in a time-domain order, the duplex terminal 900 sequentially maps the at least one data symbol onto the at least one backscattering time-frequency unit in ascending or descending order of serial numbers of the at least one backscattering time-frequency unit in the time domain. That is, the at least one data symbol is sequentially mapped onto the at least one backscattering time-frequency unit in order of the at least one backscattering time-frequency unit from first to last or from last to first in the time domain.

In some embodiments, in the case that the at least one data symbol is mapped in a frequency-domain order, the duplex terminal 900 sequentially maps the at least one data symbol onto the at least one backscattering time-frequency unit in ascending or descending order of serial numbers of the at least one backscattering time-frequency unit in the frequency domain. That is, the at least one data symbol is sequentially mapped onto the at least one backscattering time-frequency unit in order of the at least one backscattering time-frequency unit from low to high or from high to low in the frequency domain.

It should be understood that, in the embodiments of the present disclosure, a manner in which the at least one backscattering time-frequency unit is numbered is not limited in the present disclosure. For example, the at least one backscattering time-frequency unit is separately numbered in the time domain and the frequency domain, or is jointly numbered in the time domain and the frequency domain, which is not limited in the present disclosure.

In summary, in the method according to the embodiments, in the case that a signal is received, backscattering is achieved by the backscatter transmitter, and transmit and receive operations at the same frequency and in the same time domain are supported, which achieves the full-duplex communication in the true sense and achieves the symbiotic communication between a received signal and a reflected signal, thereby preventing interference of the reflected signal on the received signal and ensuring signal reception performance. Moreover, because the second signal is supported to occupy the same or partially the same frequency as the first signal, spectrum resources are saved while the full-duplex communication of simultaneous signal transmission and reception at the same frequency is supported.

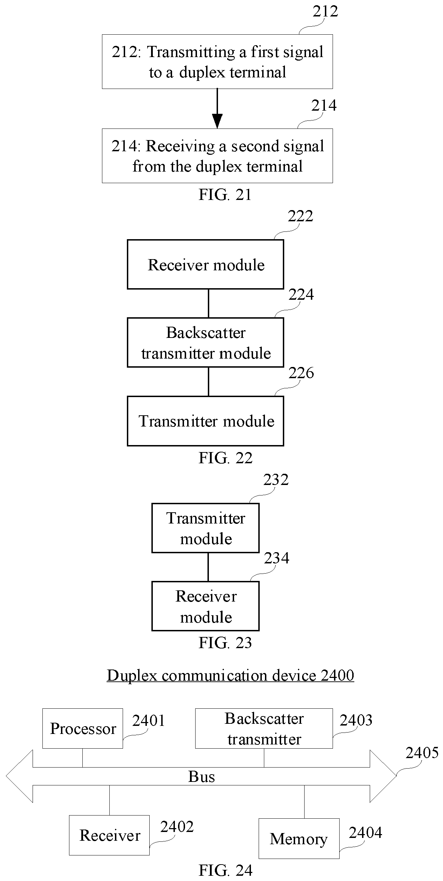

FIG. 21 is a flowchart of a method for duplex communication according to some embodiments of the present disclosure. Description is given in the embodiments based on an example in which the method is applicable to a network device. The method includes at least part of the following processes.

**In process 212,** a first signal is transmitted to a duplex terminal 900.

The first signal is carried and transmitted over an LTE channel, an NR channel, or a future 6G and subsequent channel. The channels may be categorized based on different categorization standards. For example, in the case that the channels are categorized based on transmission directions of signals, the channels include an uplink channel, a downlink channel, and a sidelink channel. For another example, in the case that the channels are categorized based on purposes of signals, the channels include a data channel, a feedback channel, a control channel, a broadcast channel, and a random access channel.

In some embodiments, the first signal is transmitted to the duplex terminal 900 by another node except the network device. Description is given in the embodiments based on an example in which the first signal is transmitted by the network device.

**In process 214,** a second signal from the duplex terminal 900 is received.

The duplex terminal 900 supports information transmission by backscattering. The duplex terminal 900 modulates and reflects the first signal not received by the duplex terminal 900, that is, transmits the second signal.

The first signal and the second signal are carried and transmitted over an LTE channel, an NR channel, or a future 6G and subsequent channel. The channels may be categorized based on different classification standards. For example, in the case that the channels are categorized based on transmission directions of signals, the channels include an uplink channel, a downlink channel, and a sidelink channel. For another example, in the case that the channels are categorized based on purposes of signals, the channels include a data channel, a feedback channel, a control channel, a broadcast channel, and a random access channel.

In some embodiments, the first signal adopts a first transmission mode, and the second signal adopts a second transmission mode. At least one of a receiver, a waveform, a modulation mode, a coding mode, or a multiple access mode is different between the first transmission mode and the second transmission mode.

Each of modulation modes of a first transmission parameter or a second transmission parameter includes any one of ASK modulation, FSK modulation, 2PSK modulation, OFDM modulation, QPSK modulation, or QAM.

The ASK modulation is digital modulation in which amplitude of a carrier varies with a digital baseband signal. In the case that the digital baseband signal is binary, the modulation mode is 2ASK modulation. The 2ASK modulation is also referred to as OOK modulation, wherein the OOK modulation controls on and off of a sinusoidal carrier by using a unipolar non-return-to-zero code sequence. In some embodiments, ASK further includes 4ASK, 8ASK, or the like, which is not limited in the embodiments.

The FSK modulation is digital modulation in which a frequency of the carrier varies with the digital baseband signal. In the case that the digital baseband signal is binary, the modulation mode is 2FSK modulation. The 2FSK modulation completes information transmission by converting two different carrier signals into digital signals. A state of transmitted information is represented by a change of the carrier frequency. The frequency of the modulated carrier varies with a 0/1 state of a binary sequence. In some embodiments, FSK further includes 4FSK, 8FSK, or the like, which is not limited in the embodiment.

The PSK modulation is digital modulation in which a phase of the carrier varies with the digital baseband signal. 2PSK is a simplest form of PSK, and conveys binary information over two carriers with an initial phase interval of 180, also known as BPSK. QPSK is quaternary PSK, and represents the input digital information using four different phase differences of the carrier.

The OFDM modulation is one type of MCM, and its main principle is to divide a channel into several orthogonal sub-channels, convert a high-speed data signal into parallel low-speed sub-data streams, and modulate the sub-data streams on each of the sub-channels for transmission. OFDM includes V-OFDM, W-OFDM, F-OFDM, MIMO-OFDM, multi-band-OFDM, or the like, which is not limited in the embodiments.

The QAM modulation is a double-sideband modulation in which two mutually orthogonal co-frequency carriers are suppressed by two independent baseband digital signals, and two-way parallel digital information transmissions is achieved by using the property that the modulated signals are orthogonal in frequency spectrums in the same bandwidth. The QAM modulation is a modulation technology that combines MASK modulation and MPSK modulation together, such that the bandwidth is doubled.

It should be noted that the examples of the modulation mode of the first transmission parameter and the modulation mode of the second transmission parameter in the above embodiments are only examples, and should not constitute any limitation on the present disclosure, and other existing or future-defined modulation modes are not excluded from generating the first transmission parameter or the second transmission parameter.

Each of coding modes of the first transmission parameter and the second transmission parameter includes any one of NRZ coding, Manchester coding, URZ coding, DBP coding, Miller coding, differential coding, RM code coding, TBCC coding, turbo code coding, outer code coding, LDPC coding, or Polar code coding.

Each of multiple access modes of the first transmission parameter and the second transmission parameter includes any one of FDMA, TDMA, CDMA, OFDMA, or DFTS-OFDM.

It should be understood that signal waveforms generated using different modulation modes are different. In the embodiments of the present disclosure, modulation modes of the first signal and the second signal are different, and thus waveforms of the first signal and the second signal are different.

In some embodiments, the second signal is transmitted to the duplex terminal 900 by another node except the network device. Description is given in the embodiments based on an example in which the second signal is transmitted to the duplex terminal 900 by the network device.

In some embodiments, the first signal and the second signal occupy the same frequency; or the frequency occupied by the second signal is part of the frequency occupied by the first signal; or the first signal includes an active signal and a noise signal, wherein the active signal and the second signal occupy different frequencies.

In some embodiments, the second signal is transmitted by backscattering the first signal on a target carrier; wherein a bandwidth occupied by the target carrier is all or part of a bandwidth occupied by the first signal.

In some embodiments, the second signal is transmitted by backscattering the first signal on a plurality of target carriers respectively, and the second signal includes a plurality of subcarrier signals respectively corresponding to the plurality of target carriers; wherein bandwidths occupied by the plurality of target carriers are acquired by dividing all or part of a bandwidth occupied by the first signal.

In some embodiments, a symbol width of the second signal or a symbol width a subcarrier signal of the second signal is K times a symbol width of the first signal, wherein K is a positive integer greater than 1. In some embodiments, a value of K is predefined, or preconfigured, or dynamically configured by the network device for the duplex terminal 900, or autonomously determined by the duplex terminal 900.

In some embodiments, the first signal is a broadband OFDM signal, and a frequency-domain bandwidth occupied by the second signal or the subcarrier signal of the second signal is not less than a minimum bandwidth unit used by the duplex terminal 900 in performing the channel estimation on the first signal.

In some embodiments, the network device further receives capability information reported by the duplex terminal 900. The capability information indicates a capability of the duplex terminal 900 to support backscatter-based full-duplex communication, which facilitates the network device in selecting an appropriate transmission mode based on service requirements in different situations. For example, in a scenario where it is inappropriate to configure UL transmission resources such as UL slots for the network device but the terminal is expected to transmit UL signals, the network device schedules the duplex terminal 900 with the full-duplex communication capability to transmit the UL signals by backscattering, and at the same time, schedules DL data transmission for the duplex terminal 900, such that the duplex terminal 900 receives DL signals from the network device while transmitting the UL signals, and the network device simultaneously transmits DL signals to the duplex terminal 900 and receives UL signals from the duplex terminal 900.

In summary, in the method for duplex communication according to the embodiments, the network device simultaneously transmits the first signal to the duplex terminal and receives the backscattered second signal from the duplex terminal, and the network device is supported to transmit the first signal and receive the second signal at the same frequency and in the same time domain, which achieves the full-duplex communication in the true sense and improves flexibility and efficiency of the communication system. Moreover, because the second signal is supported to occupy the same or partially the same frequency as the first signal, spectrum resources are saved while the full-duplex communication of simultaneous signal transmission and reception at the same frequency is supported.

FIG. 22 is a structural block diagram of an apparatus for duplex communication according to some embodiments of the present disclosure. The apparatus includes at least part of a receiver module 222 and a backscatter transmitter module.

The receiver module 222 is configured to receive a first signal. The first signal is from a network device or another node. The another node may be a router, a power supply device, or the like.

The backscatter transmitter module 224 is configured to transmit a second signal by backscattering the first signal.

During the process that the receiver module 222 receives the first signal, the backscatter transmitter module 224 transmits the second signal by backscattering the first signal not received by the receiver module 222, thereby achieving the full-duplex communication.

In some embodiments, the receiver module 222 and the backscatter transmitter module 224 share the same antenna. That is, the receiver module 222 and the backscatter transmitter module 224 use the same antenna to receive the first signal and backscatter the second signal.

In some embodiments, the receiver module 222 and the backscatter transmitter module 224 use different antennas. That is, the antenna used by the receiver module 222 to receive the first signal is different from the antenna used by the backscatter transmitter module 224 to backscatter the second signal.

In some embodiments, at least two said backscatter transmitter modules 224 are provided; or at least two backscatter transmit units are integrated in the backscatter transmitter module 224.

In some embodiments, in the case that the backscatter transmitter module 224 performs signal reflection and the reflected second signal is a high-level signal, impedance in the backscatter transmitter module 224 is set to a mismatch state, one part of the first signal is reflected by the backscatter transmitter module 224, and another part of the signal is received and processed by the receiver module 222.

In some embodiments, in the case that the backscatter transmitter module 224 does not perform signal reflection or the reflected second signal is a low-level signal or a zero-level signal, impedance in the backscatter transmitter module 224 is set to a match state, and all of the first signal is received and processed by the receiver module 222.

In some embodiments, the first signal and the second signal occupy the same frequency; or the frequency occupied by the second signal is part of the frequency occupied by the first signal; or the first signal includes an active signal and a noise signal, wherein the active signal and the second signal occupy different frequencies.

In some embodiments, the backscatter transmitter module 224 is further configured to transmit the second signal by backscattering the first signal on a target carrier; wherein a bandwidth occupied by the target carrier is all or part of a bandwidth occupied by the first signal.

In some embodiments, the backscatter transmitter module 224 is further configured to backscatter the first signal on a plurality of target carriers respectively, and transmit a plurality of subcarrier signals respectively corresponding to the plurality of target carriers, wherein the plurality of subcarrier signals form the second signal; wherein bandwidths occupied by the plurality of target carriers are acquired by dividing all or part of a bandwidth occupied by the first signal.

In some embodiments, a symbol width of the second signal or a symbol width a subcarrier signal of the second signal is K times a symbol width of the first signal, wherein K is a positive integer greater than 1. In some embodiments, a value of K is predefined, or preconfigured, or dynamically configured by the network device for the duplex terminal, or autonomously determined by the duplex terminal.

In some embodiments, a frequency-domain bandwidth occupied by the second signal or the subcarrier signal of the second signal is not less than a minimum bandwidth unit used by the receiver module 222 in performing the channel estimation on the first signal.

In some embodiments, the apparatus further includes a transmitter module 226 configured to report capability information to the network device; or the backscatter transmitter module 224 is further configured to report capability information to the network device. The capability information indicates a capability of the apparatus to support backscatter-based full-duplex communication, which facilitates the network device in selecting an appropriate transmission mode based on service requirements in different situations. For example, in a scenario where it is inappropriate to configure UL transmission resources such as UL slots for the network device but the terminal is expected to transmit UL signals, the network device schedules the apparatus with the full-duplex communication capability to transmit the UL signals by backscattering, and at the same time, schedules DL data transmission for the apparatus, such that the backscatter transmitter module 224 transmits UL signals and the receiver module 222 receives DL signals, and the apparatus simultaneously transmits DL signals and receives UL signals.

In some embodiments, the node or network device transmitting the first signal is the same as or different from the node or network device receiving the second signal.

In summary, the apparatus according to the embodiments is provided with a receiver module and a backscatter transmitter module, and during reception of the first signal, the backscatter transmitter module simultaneously transmits the second signal by backscattering the first signal, such that the apparatus has the capability to transmit and receive signals simultaneously, thereby achieving full-duplex communication of the apparatus with low complexity. Moreover, transmit and receive operations at the same frequency and in the same time domain are supported, thereby achieving the full-duplex communication in the true sense. Moreover, because the second signal is supported to occupy the same or partially the same frequency as the first signal, spectrum resources are saved while the full-duplex communication of simultaneous signal transmission and reception at the same frequency is supported. Because the backscatter transmitter has zero or low power consumption, full-duplex communication in a lower power state is achieved. In the case that the same antenna is used for signal reception and backscattering, costs are saved. In the case that different antennas are used for signal reception and backscattering, signal interference is reduced. Moreover, by adjusting a transmission frequency and a backscattering mode of the backscattered signal, flexibility of full-duplex communication is improved, thereby ensuring signal reception performance and meeting requirements of full-duplex communication in different scenarios.

FIG. 23 is a structural block diagram of an apparatus for duplex communication according to some embodiments of the present disclosure. The apparatus includes at least part of a transmitter module 232 and a receiver module 234.

The transmitter module 232 is configured to transmit a first signal to a duplex terminal.

The receiver module 234 is configured to receive a second signal from the duplex terminal, wherein the second signal is transmitted by backscattering the first signal.

In some embodiments, the first signal and the second signal occupy the same frequency; or the frequency occupied by the second signal is part of the frequency occupied by the first signal; or the first signal includes an active signal and a noise signal, wherein the active signal and the second signal occupy different frequencies.

In some embodiments, the second signal is transmitted by backscattering the first signal on a target carrier; wherein a bandwidth occupied by the target carrier is all or part of a bandwidth occupied by the first signal.

In some embodiments, the second signal is transmitted by backscattering the first signal on a plurality of target carriers respectively, and the second signal includes a plurality of subcarrier signals respectively corresponding to the plurality of target carriers; wherein bandwidths occupied by the plurality of target carriers are acquired by dividing all or part of a bandwidth occupied by the first signal.

In some embodiments, a symbol width of the second signal or a symbol width a subcarrier signal of the second signal is K times a symbol width of the first signal, wherein K is a positive integer greater than 1. In some embodiments, a value of K is predefined, or preconfigured, or dynamically configured by the network device for the duplex terminal, or autonomously determined by the duplex terminal.

In some embodiments, the first signal is a broadband OFDM signal, and a frequency-domain bandwidth occupied by the second signal or the subcarrier signal of the second signal is not less than a minimum bandwidth unit used by the duplex terminal in performing the channel estimation on the first signal.

In some embodiments, the receiver module 234 is further configured to receive capability information reported by the duplex terminal. The capability information indicates a capability of the duplex terminal to support backscatter-based full-duplex communication, which facilitates the apparatus in selecting an appropriate transmission mode based on service requirements in different situations. For example, in a scenario where it is inappropriate to configure UL transmission resources such as UL slots for the transmitter module 232 in the apparatus but the terminal is expected to transmit UL signals, the transmitter module 232 schedules the duplex terminal with the full-duplex communication capability to transmit the UL signals by backscattering, and at the same time, schedules DL data transmission for the duplex terminal, such that the duplex terminal receives DL signals from the transmitter module 232 while transmitting the UL signals, and the apparatus simultaneously transmits DL signals to the duplex terminal and receives UL signals from the duplex terminal.

In summary, the apparatus according to the embodiments communicates and interacts with the duplex terminal, simultaneously transmits the first signal to the duplex terminal and receives the backscattered second signal from the duplex terminal, and supports transmitting the first signal and receiving the second signal at the same frequency and in the same time domain, which achieves full-duplex communication in the true sense and improves operational flexibility and efficiency of the communication system. Moreover, because the second signal is supported to occupy the same or partially the same frequency as the first signal, spectrum resources are saved while the full-duplex communication of simultaneous signal transmission and reception at the same frequency is supported.

FIG. 24 is a schematic structural diagram of a device for duplex communication according to some embodiments of the present disclosure. The duplex communication device 2400 includes: a processor 2401, a receiver 2402, a backscatter transmitter 2403, a memory 2404, and a bus 2405.

The processor 2401 includes one or more processing cores. The processor 2401 runs various functional applications and performs information processing by running software programs and modules.

The receiver 2402 and the backscatter transmitter 2403 may be implemented as one communication component. The communication component may be a communication chip.

The memory 2404 is connected to the processor 2401 over the bus 2405. The memory 2404 may be configured to store at least one instruction. The processor 2401, when loading and executing the at least one instruction, is caused to perform the processes in the above method embodiments.

In addition, the memory 2404 may be implemented by any type of volatile or non-volatile storage device or a combination thereof. The volatile or non-volatile storage device includes, but is not limited to, a magnetic disk or an optical disc, an electrically erasable programmable read only memory (EEPROM), an erasable programmable read-only memory (EPROM), a static random-access memory (SRAM), a read-only memory (ROM), a magnetic memory, a flash memory, and a programmable read-only memory (PROM).

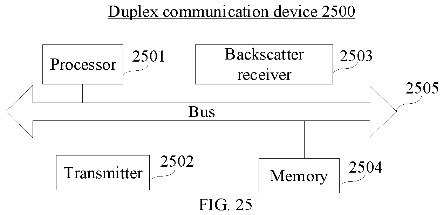

FIG. 25 is a schematic structural diagram of a device for duplex communication according to some embodiments of the present disclosure. The duplex communication device 2500 includes: a processor 2501, a transmitter 2502, a backscatter receiver 2503, a memory 2504, and a bus 2505.

The processor 2501 includes one or more processing cores. The processor 2501 runs various functional applications and performs information processing by running software programs and modules.

The transmitter 2502 and the backscatter receiver 2503 may be implemented as one communication component. The communication component may be a communication chip.

The memory 2504 is connected to the processor 2501 over the bus 2505. The memory 2504 may be configured to store at least one instruction. The processor 2501, when loading and executing the at least one instruction, is caused to perform the processes in the above method embodiments.

In addition, the memory 2504 may be implemented by any type of volatile or non-volatile storage device or a combination thereof. The volatile or non-volatile storage device includes, but is not limited to, a magnetic disk or an optical disc, an EEPROM, an EPROM, a SRAM, a ROM, a magnetic memory, a flash memory, and a PROM.

Some embodiments of the present disclosure further provide a chip. The chip includes at least one of: at least one programmable logic circuit or one or more program instructions. A terminal equipped with the chip is run to perform the method for duplex communication as described above.

Those skilled in the art should be aware that, in the foregoing one or more examples, functions described in the embodiments of the present disclosure may be implemented by hardware, software, firmware, or any combination thereof. In the case that the functions are implemented by software, the functions may be stored in a computer-readable medium or transmitted as one or more program instructions or codes in the computer-readable medium. The computer-readable medium includes a computer storage medium and a communication medium. The communication medium includes any medium that enables a computer program to be transmitted from one place to another place. The storage medium may be any available medium accessible to a general-purpose or special-purpose computer.

The above are merely embodiments of the present disclosure, and are not intended to limit the present disclosure. Any modification, equivalent replacement, improvement, or the like made within the principles of the present disclosure shall fall within protection scope of the present disclosure.

## Claims

1. A duplex terminal, comprising:
a receiver; and
a backscatter transmitter, wherein the backscatter transmitter is a transmitter capable of transmitting information by backscattering.

2. The duplex terminal according to claim 1, wherein the receiver and the backscatter transmitter share a same antenna.

3. The duplex terminal according to claim 1, wherein the receiver is connected to a first antenna, and the backscatter transmitter is connected to a second antenna.

4. The duplex terminal according to any one of claims 1 to 3, wherein
at least two said backscatter transmitters are provided; or
at least two backscatter transmit units are integrated in the backscatter transmitter.

5. The duplex terminal according to any one of claims 1 to 3, wherein the receiver comprises at least one of::
a primary receiver or a secondary receiver;
wherein power consumption of the secondary receiver is less than power consumption of the primary receiver.

6. The duplex terminal according to any one of claims 1 to 3, wherein the duplex terminal further comprises: a primary transmitter.

7. A method for duplex communication, applicable to the duplex terminal as defined in any one of claims 1 to 6, the method comprising:
receiving a first signal using the receiver; and
transmitting a second signal by backscattering the first signal using the backscatter transmitter.

8. The method according to claim 7, wherein
the first signal and the second signal occupy a same frequency; or
a frequency occupied by the second signal is part of a frequency occupied by the first signal; or
the first signal comprises an active signal and a noise signal, wherein the active signal and the second signal occupy different frequencies.

9. The method according to claim 7 or 8, wherein transmitting the second signal by backscattering the first signal using the backscatter transmitter comprises:
transmitting the second signal by backscattering the first signal on a target carrier using the backscatter transmitter;
wherein a bandwidth occupied by the target carrier is all or part of a bandwidth occupied by the first signal.

10. The method according to claim 7 or 8, wherein transmitting the second signal by backscattering the first signal using the backscatter transmitter comprises:
transmitting a plurality of subcarrier signals respectively corresponding to a plurality of target carriers by backscattering the first signal on the plurality of target carriers respectively using the backscatter transmitter;
wherein the second signal is composed of the plurality of subcarrier signals, and bandwidths occupied by the plurality of target carriers are acquired by dividing all or part of a bandwidth occupied by the first signal.

11. The method according to claim 7 or 8, wherein a symbol width of the second signal or a symbol width of a subcarrier signal of the second signal is K times a symbol width of the first signal, wherein K is a positive integer greater than 1.

12. The method according to claim 11, wherein the first signal is a broadband orthogonal frequency division multiplexing (OFDM) signal; and a frequency-domain bandwidth occupied by the second signal or the subcarrier signal of the second signal is not less than a minimum bandwidth unit used by the duplex terminal in performing channel estimation on the first signal.

13. The method according to any one of claims 7 to 12, comprising:
reporting capability information to a network device, wherein the capability information indicates a capability to support backscatter-based full-duplex communication.

14. A method for duplex communication, applicable to a network device, the method comprising:
transmitting a first signal to a duplex terminal; and
receiving a second signal from the duplex terminal, wherein the second signal is transmitted by backscattering the first signal.

15. The method according to claim 14, wherein
the first signal and the second signal occupy a same frequency; or
a frequency occupied by the second signal is part of a frequency occupied by the first signal; or
the first signal comprises an active signal and a noise signal, wherein the active signal and the second signal occupy different frequencies.

16. The method according to claim 14 or 15, wherein the second signal is transmitted by backscattering the first signal on a target carrier;
wherein a bandwidth occupied by the target carrier is all or part of a bandwidth occupied by the first signal.

17. The method according to claim 14 or 15, wherein the second signal is transmitted by backscattering the first signal on a plurality of target carriers respectively, and the second signal comprises a plurality of subcarrier signals respectively corresponding to the plurality of target carriers;
wherein bandwidths occupied by the plurality of target carriers are acquired by dividing all or part of a bandwidth occupied by the first signal.

18. The method according to claim 14 or 15, wherein a symbol width of the second signal or a symbol width of a subcarrier signal of the second signal is K times a symbol width of the first signal, wherein K is a positive integer greater than 1.

19. The method according to claim 18, wherein the first signal is a broadband orthogonal frequency division multiplexing (OFDM) signal; and a frequency-domain bandwidth occupied by the second signal or the subcarrier signal of the second signal is not less than a minimum bandwidth unit used by the duplex terminal in performing channel estimation on the first signal.

20. The method according to any one of claims 14 to 19, comprising:
receiving capability information reported by the duplex terminal, wherein the capability information indicates a capability of the duplex terminal to support backscatter-based full-duplex communication.

21. An apparatus for duplex communication, comprising:
a receiver module, configured to receive a first signal; and
a backscatter transmitter module, configured to transmit a second signal by backscattering the first signal.

22. The apparatus according to claim 21, wherein
the first signal and the second signal occupy a same frequency; or
a frequency occupied by the second signal is part of a frequency occupied by the first signal; or
the first signal comprises an active signal and a noise signal, wherein the active signal and the second signal occupy different frequencies.

23. The apparatus according to claim 21 or 22, wherein the backscatter transmitter module is further configured to transmit the second signal by backscattering the first signal on a target carrier; wherein a bandwidth occupied by the target carrier is all or part of a bandwidth occupied by the first signal.

24. The apparatus according to claim 21 or 22, wherein the backscatter transmitter module is further configured to transmit a plurality of subcarrier signals respectively corresponding to a plurality of target carriers by backscattering the first signal on the plurality of target carriers respectively, wherein the second signal is composed of the plurality of subcarrier signals, and bandwidths occupied by the plurality of target carriers are acquired by dividing all or part of a bandwidth occupied by the first signal.

25. The apparatus according to claim 21 or 22, wherein a symbol width of the second signal or a symbol width a subcarrier signal of the second signal is K times a symbol width of the first signal, wherein K is a positive integer greater than 1.

26. The apparatus according to claim 25, wherein the first signal is a broadband orthogonal frequency division multiplexing (OFDM) signal; and a frequency-domain bandwidth occupied by the second signal or the subcarrier signal of the second signal is not less than a minimum bandwidth unit used by the receiver module in performing channel estimation on the first signal.

27. The apparatus according to any one of claims 21 to 26, wherein
the apparatus further comprises a transmitter module configured to report capability information to a network device, wherein the capability information indicates a capability of the apparatus to support backscatter-based full-duplex communication; or
the backscatter transmitter module is further configured to report capability information to a network device, wherein the capability information indicates a capability of the apparatus to support backscatter-based full-duplex communication.

28. An apparatus for duplex communication, comprising:
a transmitter module, configured to transmit a first signal to a duplex terminal; and
a receiver module, configured to receive a second signal from the duplex terminal, wherein the second signal is transmitted by backscattering the first signal.

29. The apparatus according to claim 28, wherein
the first signal and the second signal occupy a same frequency; or
a frequency occupied by the second signal is part of a frequency occupied by the first signal; or
the first signal comprises an active signal and a noise signal, wherein the active signal and the second signal occupy different frequencies.

30. The apparatus according to claim 28 or 29, wherein the second signal is transmitted by backscattering the first signal on a target carrier; wherein a bandwidth occupied by the target carrier is all or part of a bandwidth occupied by the first signal.

31. The apparatus according to claim 28 or 29, wherein the second signal is transmitted by backscattering the first signal on a plurality of target carriers respectively, and the second signal comprises a plurality of subcarrier signals respectively corresponding to the plurality of target carriers; wherein bandwidths occupied by the plurality of target carriers are acquired by dividing all or part of a bandwidth occupied by the first signal.

32. The apparatus according to claim 28 or 29, wherein a symbol width of the second signal or a symbol width of a subcarrier signal of the second signal is K times a symbol width of the first signal, wherein K is a positive integer greater than 1.

33. The apparatus according to claim 32, wherein the first signal is a broadband orthogonal frequency division multiplexing (OFDM) signal; and a frequency-domain bandwidth occupied by the second signal or the subcarrier signal of the second signal is not less than a minimum bandwidth used by the duplex terminal in performing channel estimation on the first signal.

34. The apparatus according to any one of claims 28 to 33, wherein the receiver module is further configured to:
receive capability information reported by the duplex terminal, wherein the capability information indicates a capability of the duplex terminal to support backscatter-based full-duplex communication.

35. A terminal, comprising:
a processor;
a receiver and a backscatter transmitter that are connected to the processor; and
a memory configured to store one or more executable instructions of the processor;
wherein the processor, when loading and executing the one or more executable instructions, is caused to perform the method for duplex communication as defined in any one of claims 7 to 13.

36. A network device, comprising:
a processor;
a transmitter and a backscatter receiver that are connected to the processor;
a memory configured to store one or more executable instructions of the processor;
wherein the processor, when loading and executing the one or more executable instructions, is caused to perform the method for duplex communication as defined in any one of claims 14 to 20.

37. A chip, comprising at least one of: at least one programmable logic circuit or one or more program instructions, wherein a terminal equipped with the chip is run to perform the method for duplex communication as defined in any one of claims 7 to 20.
